(19)

Europäisches
Patentamt
European
Patent Office
Office européen
des brevets

(11)  **EP 4 568 233 A2**

(12)  **EUROPEAN PATENT APPLICATION**

(43) Date of publication:
**11.06.2025  Bulletin 2025/24**

(21) Application number: **25172211.2**

(22) Date of filing: **17.12.2020**

(51) International Patent Classification (IPC):
***H04L 69/04*** *(2022.01)*

(52) Cooperative Patent Classification (CPC):
**H04W 64/00; G01S 5/0036; H04L 69/04**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **28.02.2020  GR 20200100115**

(62) Document number(s) of the earlier application(s) in
accordance with Art. 76 EPC:
**20842453.1 / 4 111 223**

(71) Applicant: **QUALCOMM Incorporated
San Diego, CA 92121-1714 (US)**

(72) Inventors:
• **MANOLAKOS, Alexandros
San Diego, 92121-1714 (US)**

• **AKKARAKARAN,, Sony
San Diego, 92121-1714 (US)**
• **FISCHER, Sven
San Diego, 92121-1714 (US)**

(74) Representative: **Reddie & Grose LLP
The White Chapel Building
10 Whitechapel High Street
London E1 8QS (GB)**

Remarks:
This application was filed on 24-04-2025 as a
divisional application to the application mentioned
under INID code 62.

(54)  **METHODS AND APPARATUS FOR REDUCING OVERHEAD OF POSITIONING STATE INFORMATION (PSI) FOR LOWER LAYER TRANSMISSION**

(57)     A user equipment (UE) generates a positioning state information (PSI) report that is transmitted to a network entity in a lower layer channel container, e.g., in the Physical channel or Medium Access Control channel, to reduce latency. The PSI report may be generated based on a plurality of PSI report elements determined from positioning measurements performed by the UE. Each PSI report element includes information related to positioning measurements performed by the UE. One or more of the PSI report elements may be compressed based on a compression configuration, in order to reduce overhead. If the size of the PSI report elements, after one or more PSI report elements are compressed, is larger than the lower layer channel container, one or more of the PSI reports may be omitted from the PSI report. A network entity may receive and process the PSI report based on the compression configuration.

FIG. 9

EP 4 568 233 A2

## Description

## BACKGROUND OF THE DISCLOSURE

### 1. Field of the Disclosure

Aspects of the disclosure relate generally to wireless communications and the like.

### 2. Description of the Related Art

Wireless communication systems have developed through various generations, including a first-generation analog wireless phone service (1G), a second-generation (2G) digital wireless phone service (including interim 2.5G networks), a third-generation (3G) high speed data, Internet-capable wireless service, and a fourth-generation (4G) service (e.g., Long-Term Evolution (LTE), WiMax). There are presently many different types of wireless communication systems in use, including cellular and personal communications service (PCS) systems. Examples of known cellular systems include the cellular Analog Advanced Mobile Phone System (AMPS), and digital cellular systems based on code division multiple access (CDMA), frequency division multiple access (FDMA), time division multiple access (TDMA), the Global System for Mobile access (GSM) variation of TDMA, etc.

A fifth generation (5G) mobile standard calls for higher data transfer speeds, greater numbers of connections, and better coverage, among other improvements. The 5G standard (also referred to as "New Radio" or "NR"), according to the Next Generation Mobile Networks Alliance, is designed to provide data rates of several tens of megabits per second to each of tens of thousands of users, with 1 gigabit per second to tens of workers on an office floor. Several hundreds of thousands of simultaneous connections should be supported in order to support large sensor deployments. Consequently, the spectral efficiency of 5G mobile communications should be significantly enhanced compared to the current 4G / LTE standard. Furthermore, signaling efficiencies should be enhanced and latency should be substantially reduced compared to current standards.

## SUMMARY

A user equipment (UE) generates a positioning state information (PSI) report that is transmitted to a network entity in a lower layer channel container, e.g., in the Physical channel or Medium Access Control channel, to reduce latency. The PSI report may be generated based on a plurality of PSI report elements determined from uplink (UL), downlink (DL) or UL and DL positioning measurements performed by the UE. Each PSI report element includes information related to positioning measurements performed by the UE. One or more of the PSI report elements may be compressed based on a compression configuration, in order to reduce overhead. If the size of the PSI report elements, after one or more PSI report elements are compressed, is larger than the lower layer channel container, one or more of the PSI reports may be omitted from the PSI report. A network entity may receive and process the PSI report based on the compression configuration.

In one implementation, a method for a user equipment (UE) wireless communications performed by the UE, includes determining a plurality of positioning state information (PSI) report elements, wherein each PSI report element comprises information related to positioning measurements performed by the UE; compressing one or more of the PSI report elements; generating a PSI report with the plurality of PSI report elements wherein one or more of the PSI report elements are compressed; and transmitting the PSI report to a network entity in a lower layer channel container.

In one implementation, a user equipment (UE) configured for wireless communications, includes a wireless transceiver configured to wirelessly communicate with a network entity in a wireless communication system; at least one memory; at least one processor coupled to the wireless transceiver and the at least one memory, wherein the at least one processor is configured to: determine a plurality of positioning state information (PSI) report elements, wherein each PSI report element comprises information related to positioning measurements performed by the UE; compress one or more of the PSI report elements; generate a PSI report with the plurality of PSI report elements wherein one or more of the PSI report elements are compressed; and transmit, via the wireless transceiver, the PSI report to a network entity in a lower layer channel container.

In one implementation, a user equipment (UE) configured for wireless communications, includes means for determining a plurality of positioning state information (PSI) report elements, wherein each PSI report element comprises information related to positioning measurements performed by the UE; means for compressing one or more of the PSI report elements; means for generating a PSI report with the plurality of PSI report elements wherein one or more of the PSI report elements are compressed; and means for transmitting the PSI report to a network entity in a lower layer channel container.

In one implementation, a non-transitory storage medium including program code stored thereon, the program code is operable to configure at least one processor in a user equipment (UE) for wireless communications, includes program code to determine a plurality of positioning state information (PSI) report elements, wherein each PSI report element comprises information related to positioning measurements performed by the UE; program code to compress one or more of the PSI report elements; program code to generate a PSI report with the plurality of PSI report elements wherein one or more of the PSI report elements are compressed; and program code to transmit the PSI report to a network entity in a lower layer channel container.

In one implementation, a method for a user equipment (UE) wireless communications performed by a network entity in a wireless network, includes receiving from the UE a positioning state information (PSI) report in a lower layer channel container, the PSI report containing PSI report elements, wherein each PSI report element comprises information related to positioning measurements performed by the UE, wherein one or more of the PSI report elements in the PSI report are compressed; and processing the PSI report to obtain the information related to positioning measurements.

In one implementation, a network entity in a wireless network configured to support wireless communications from a user equipment (UE), includes an external interface configured to wirelessly communicate with the UE; at least one memory; at least one processor coupled to the external interface and the at least one memory, wherein the at least one processor is configured to: receive from the UE, via the external interface, a positioning state information (PSI) report in a lower layer channel container, the PSI report containing PSI report elements, wherein each PSI report element comprises information related to positioning measurements performed by the UE, wherein one or more of the PSI report elements in the PSI report are compressed; and process the PSI report to obtain the information related to positioning measurements.

In one implementation, a network entity in a wireless network configured to support wireless communications from a user equipment (UE), includes means for receiving from the UE a positioning state information (PSI) report in a lower layer channel container, the PSI report containing PSI report elements, wherein each PSI report element comprises information related to positioning measurements performed by the UE, wherein one or more of the PSI report elements in the PSI report are compressed; and means for processing the PSI report to obtain the information related to positioning measurements.

In one implementation, a non-transitory storage medium including program code stored thereon, the program code is operable to configure at least one processor in a network entity in a wireless network to support wireless communications from a user equipment (UE), includes program code to receive from the UE a positioning state information (PSI) report in a lower layer channel container, the PSI report containing PSI report elements, wherein each PSI report element comprises information related to positioning measurements performed by the UE, wherein one or more of the PSI report elements in the PSI report are compressed; and program code to process the PSI report to obtain the information related to positioning measurements.

## BRIEF DESCRIPTION OF THE DRAWINGS

The accompanying drawings are presented to aid in the description of various aspects of the disclosure and are provided solely for illustration of the aspects and not limitation thereof.

FIG. 1 illustrates an exemplary wireless communications system, according to various aspects of the disclosure.

FIGS. 2A and 2B illustrate example wireless network structures, according to various aspects of the disclosure.

FIG. 3 illustrates a block diagram of a design of base station and user equipment (UE), which may be one of the base stations and one of the UEs in Fig. 1.

FIG. 4 is a diagram of a structure of an exemplary subframe sequence with positioning reference signal (PRS) positioning occasions.

FIG. 5 is a block diagram illustrating a UE and network entity configured to respectively transmit and receive on a lower layer channel a PSI report with PSI report elements.

FIG. 6 illustrates an example of different ways to compress positioning measurement information that may be includes in a PSI report element.

FIG. 7 illustrates a semi-logarithmic scaling that may be used to compress positioning measurement information that may be includes in a PSI report element.

FIG. 8 is a block diagram illustrating a UE configured to order and omit low priority Positioning State Information (PSI) report elements in a PSI report to be transmitted on a lower layer channel.

FIG. 9 is a flow chart illustrating a process in which the UE may compress and omit one or more PSI report elements so that the resulting PSI report fits within the lower layer channel container.

FIG. 10 is a flow chart illustrating a process in which the UE may iteratively compresses and omits one or more PSI report elements so that the resulting PSI report fits within the lower layer channel container.

FIG. 11A illustrates a position fix for a UE provided as polar coordinates relative to a serving base station.

FIG. 11B illustrates a position fix for a UE provided as cartesian coordinates relative to a serving base station.

FIG. 12 is a message flow with various messages sent between components of a wireless communication system, illustrating compressing PSI report elements in a PSI report that is transmitted on a lower layer channel.

FIG. 13 is a flowchart for an exemplary method for wireless communications for a UE in which the UE compresses PSI report elements in a PSI report that is transmitted on a lower layer channel.

FIG. 14 is a flowchart for an exemplary method for wireless communications for a UE in which a network entity receives a PSI report on a lower layer channel that includes PSI report elements that are compressed.

FIG. 15 is a schematic block diagram illustrating certain exemplary features of a UE enabled to reduce overhead in a PSI report that is transmitted on a lower layer channel by compressing PSI report elements, according to the disclosure herein.

FIG. 16 shows a schematic block diagram illustrating certain exemplary features of a network entity enabled to support wireless communications with a UE that reduces overhead in a PSI report that is transmitted on a lower layer channel by compressing PSI report elements.

## DETAILED DESCRIPTION

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE) and "base station" are not intended to be specific or otherwise limited to any particular Radio Access Technology (RAT), unless otherwise noted. In general, a UE may be any wireless communication device (e.g., a mobile phone, router, tablet computer, laptop computer, tracking device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a Radio Access Network (RAN). As used herein, the term "UE" may be referred to interchangeably as an "access terminal" or "AT," a "client device," a "wireless device," a "subscriber device," a "subscriber terminal," a "subscriber station," a "user terminal" or UT, a "mobile terminal," a "mobile station," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on IEEE 802.11, etc.) and so on.

A base station may operate according to one of several RATs in communication with UEs depending on the network in which it is deployed, and may be alternatively referred to as an access point (AP), a network node, a NodeB, an evolved NodeB (eNB), a New Radio (NR) Node B (also referred to as a gNB or gNodeB), etc. In addition, in some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an UL / reverse or DL / forward traffic channel.

The term "base station" may refer to a single physical transmission point or to multiple physical transmission points that may or may not be co-located. For example, where the term "base station" refers to a single physical transmission point, the physical transmission point may be an antenna of the base station corresponding to a cell of the base station. Where the term "base station" refers to multiple co-located physical transmission points, the physical transmission points may be an array of antennas (e.g., as in a multiple-input multiple-output (MIMO) system or where the base station employs beamforming) of the base station. Where the term "base station" refers to multiple non-co-located physical transmission points, the physical transmission points may be a distributed antenna system (DAS) (a network of spatially separated antennas connected to a common source via a transport medium) or a remote radio head (RRH) (a remote base station connected to a serving base station). Alternatively, the non-co-located physical transmission points may be the serving base station receiving the measurement report from the UE and a neighbor base station whose reference RF signals the UE is measuring.

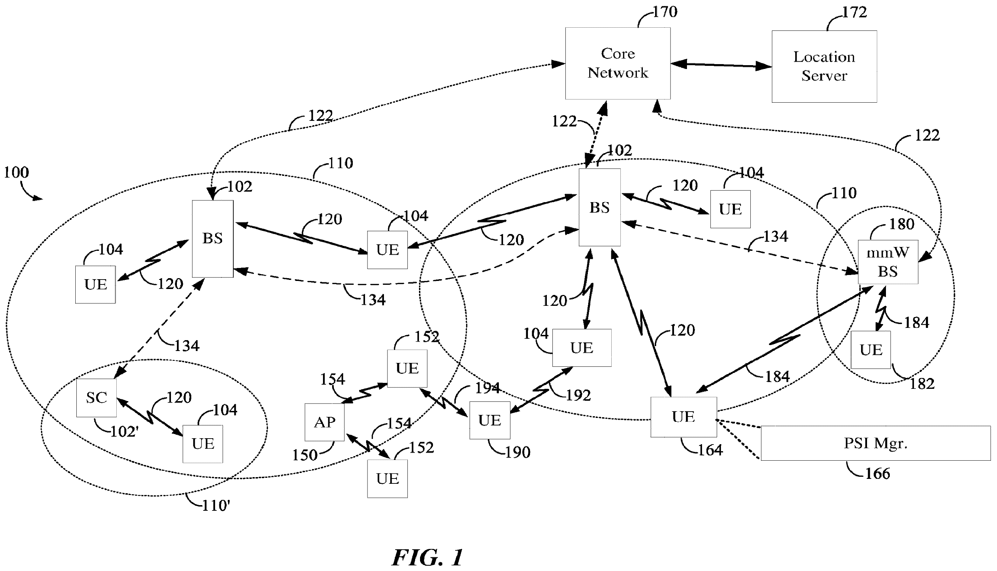

FIG. 1 illustrates an exemplary wireless communications system 100. The wireless communications system 100 (which may also be referred to as a wireless wide area network (WWAN)) may include various base stations 102 and various UEs 104. The base stations 102 may include macro cell base stations (high power cellular base stations) and/or small cell base stations (low power cellular base stations). In an aspect, the macro cell base station may include eNBs where the wireless communications system 100 corresponds to an LTE network, or gNBs where the wireless communications system 100 corresponds to a 5G network, or a combination of both, and the small cell base stations may include femtocells, picocells, microcells, etc.

The base stations 102 may collectively form a RAN and interface with a core network 170 (e.g., an evolved packet core (EPC) or next generation core (NGC)) through backhaul links 122, and through the core network 170 to one or more location servers 172. In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / NGC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCID), a virtual cell identifier (VCID)) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' may have a coverage area 110' that substantially overlaps with the coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include UL (also referred to as reverse link) transmissions from a UE 104 to a base station 102 and/or downlink (DL) (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to DL and UL (e.g., more or less carriers may be allocated for DL than for UL).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) prior to communicating in order to determine whether the channel is available.

The small cell base station 102' may operate in a licensed and/or an unlicensed frequency spectrum. When operating in an unlicensed frequency spectrum, the small cell base station 102' may employ LTE or 5G technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. LTE in an unlicensed spectrum may be referred to as LTE-unlicensed (LTE-U), licensed assisted access (LAA), or MulteFire.

The wireless communications system 100 may further include a millimeter wave (mmW) base station 180 that may operate in mmW frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omnidirectionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

In 5G, the frequency spectrum in which wireless nodes (e.g., base stations 102/180, UEs 104/182) operate is divided into multiple frequency ranges, FR1 (from 450 to 6000 MHz), FR2 (from 24250 to 52600 MHz), FR3 (above 52600 MHz), and FR4 (between FR1 and FR2). In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels. A secondary carrier is a carrier operating on a second frequency (e.g., FR2) that may be configured once the RRC connection is established between the UE 104 and the anchor carrier and that may be used to provide additional radio resources. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

The wireless communications system 100 may further include one or more UEs, such as UE 190, that connects indirectly to one or more communication networks via one or more device-to-device (D2D) peer-to-peer (P2P) links. In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth®, and so on.

The wireless communications system 100 may further include a UE 164 that may communicate with a macro cell base station 102 over a communication link 120 and/or the mmW base station 180 over a mmW communication link 184. For example, the macro cell base station 102 may support a PCell and one or more SCells for the UE 164 and the mmW base station 180 may support one or more SCells for the UE 164. In an aspect, the UE 164 may include a PSI manager 166 that may enable the UE 164 to perform the UE operations described herein. Note that although only one UE in FIG. 1 is illustrated as having a PSI manager 166, any of the UEs in FIG. 1 may be configured to perform the UE operations described herein.

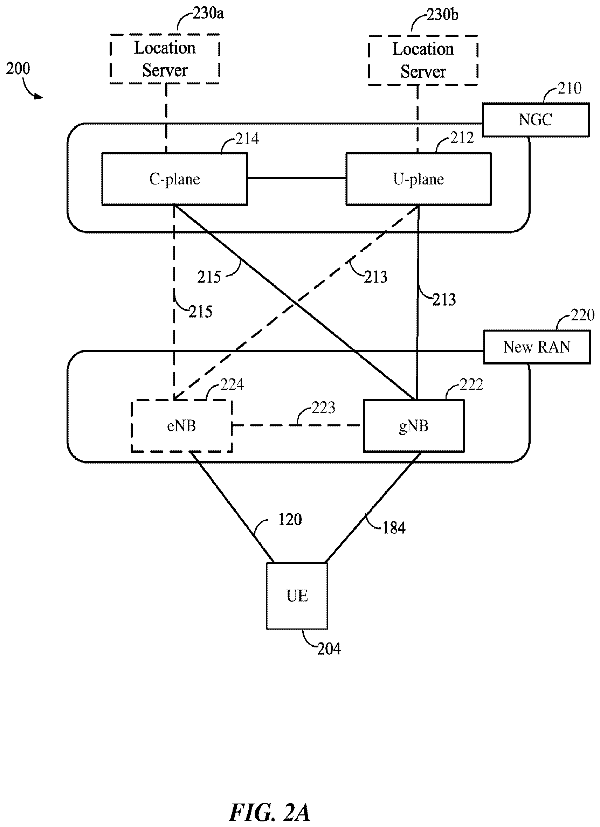

FIG. 2A illustrates an example wireless network structure 200. For example, an NGC 210 (also referred to as a "5GC") can be viewed functionally as control plane functions 214 (e.g., UE registration, authentication, network access, gateway selection, etc.) and user plane functions 212, (e.g., UE gateway function, access to data networks, IP routing, etc.) which operate cooperatively to form the core network. User plane interface (NG-U) 213 and control plane interface (NG-C) 215 connect the gNB 222 to the NGC 210 and specifically to the control plane functions 214 and user plane functions 212. In an additional configuration, an eNB 224 may also be connected to the NGC 210 via NG-C 215 to the control plane functions 214 and NG-U 213 to user plane functions 212. Further, eNB 224 may directly communicate with gNB 222 via a backhaul connection 223. In some configurations, the New RAN 220 may only have one or more gNBs 222, while other configurations include one or more of both eNBs 224 and gNBs 222. Either gNB 222 or eNB 224 may communicate with UEs 204 (e.g., any of the UEs depicted in FIG. 1). Another optional aspect may include one or more location servers 230a, 230b (sometimes collectively referred to as location server 230) (which may correspond to location server 172), which may be in communication with the control plane functions 214 and user plane functions 212, respectively, in the NGC 210 to provide location assistance for UEs 204. The location server 230 can be implemented as a plurality of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, NGC 210, and/or via the Internet (not illustrated). Further, the location server 230 may be integrated into a component of the core network, or alternatively may be external to the core network, e.g., in the New RAN 220.

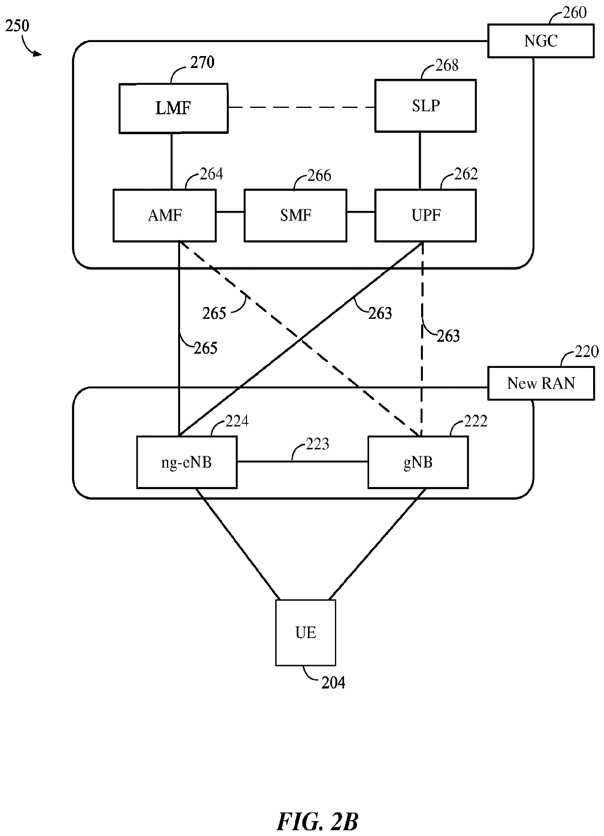

FIG. 2B illustrates another example wireless network structure 250. For example, an NGC 260 (also referred to as a "5GC") can be viewed functionally as control plane functions, provided by an access and mobility management function (AMF) 264, user plane function (UPF) 262, a session management function (SMF) 266, SLP 268, and an LMF 270, which operate cooperatively to form the core network (i.e., NGC 260). User plane interface 263 and control plane interface 265 connect the ng-eNB 224 to the NGC 260 and specifically to UPF 262 and AMF 264, respectively. In an additional configuration, a gNB 222 may also be connected to the NGC 260 via control plane interface 265 to AMF 264 and user plane interface 263 to UPF 262. Further, eNB 224 may directly communicate with gNB 222 via the backhaul connection 223, with or without gNB direct connectivity to the NGC 260. In some configurations, the New RAN 220 may only have one or more gNBs 222, while other configurations include one or more of both ng-eNBs 224 and gNBs 222. Either ng-gNB 222 or eNB 224 may communicate with UEs 204 (e.g., any of the UEs depicted in FIG. 1). The base stations of the New RAN 220 communicate with the AMF 264 over the N2 interface and the UPF 262 over the N3 interface.

The functions of the AMF include registration management, connection management, reachability management, mobility management, lawful interception, transport for session management (SM) messages between the UE 204 and the SMF 266, transparent proxy services for routing SM messages, access authentication and access authorization, transport for short message service (SMS) messages between the UE 204 and the short message service function (SMSF) (not shown), and security anchor functionality (SEAF). The AMF also interacts with the authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF retrieves the security material from the AUSF. The functions of the AMF also include security context management (SCM). The SCM receives a key from the SEAF that it uses to derive access-network specific keys. The functionality of the AMF also includes location services management for regulatory services, transport for location services messages between the UE 204 and the location management function (LMF) 270 (which may correspond to location server 172), as well as between the New RAN 220 and the LMF 270, evolved packet system (EPS) bearer identifier allocation for interworking with the EPS, and UE 204 mobility event notification. In addition, the AMF also supports functionalities for non-Third Generation Partnership Project (3GPP) access networks.

Functions of the UPF include acting as an anchor point for intra-/inter-RAT mobility (when applicable), acting as an external protocol data unit (PDU) session point of interconnect to the data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., UL/DL rate enforcement, reflective QoS marking in the DL), UL traffic verification (service data flow (SDF) to QoS flow mapping), transport level packet marking in the UL and DL, DL packet buffering and DL data notification triggering, and sending and forwarding of one or more "end markers" to the source RAN node.

The functions of the SMF 266 include session management, UE Internet protocol (IP) address allocation and management, selection and control of user plane functions, configuration of traffic steering at the UPF to route traffic to the proper destination, control of part of policy enforcement and QoS, and downlink data notification. The interface over which the SMF 266 communicates with the AMF 264 is referred to as the N11 interface.

Another optional aspect may include an LMF 270, which may be in communication with the NGC 260 to provide location assistance for UEs 204. The LMF 270 can be implemented as a plurality of separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, NGC 260, and/or via the Internet (not illustrated).

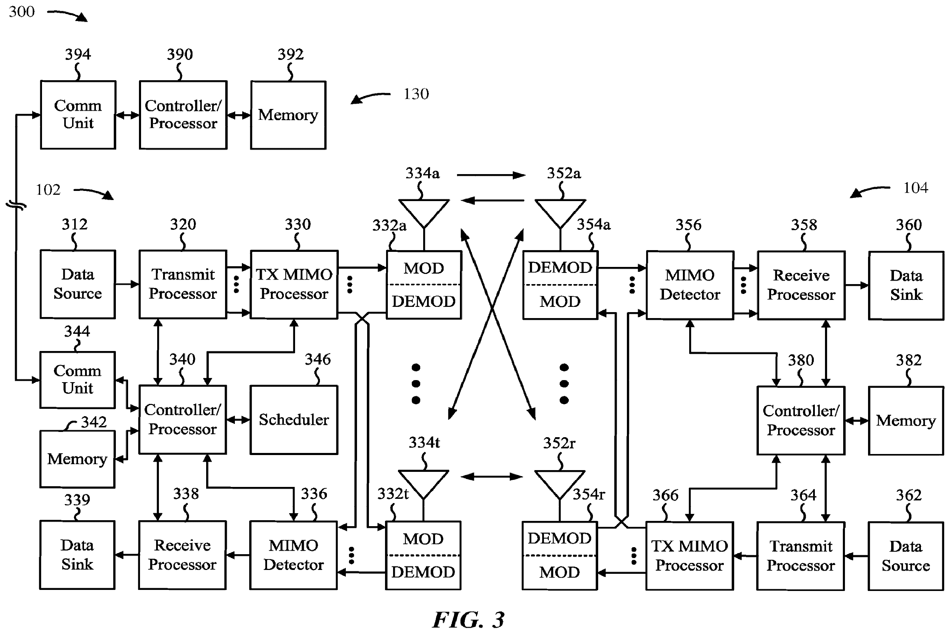

**FIG.** 3 shows a block diagram of a design 300 of base station 102 and UE 104, which may be one of the base stations and one of the UEs in FIG. 1. Base station 102 may be equipped with T antennas 334a through 334t, and UE 104 may be equipped with R antennas 352a through 352r, where in general T ≥ 1 and R ≥ 1.

At base station 102, a transmit processor 320 may receive data from a data source 312 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 320 may also process system information (e.g., for semi-static resource partitioning information (SRPI) and/or the like) and control information (e.g., CQI requests, grants, upper layer signaling, and/or the like) and provide overhead symbols and control symbols. Transmit processor 320 may also generate reference symbols for reference signals (e.g., the cell-specific reference signal (CRS)) and synchronization signals (e.g., the primary synchronization signal (PSS) and secondary synchronization signal (SSS)). A transmit (TX) multiple-input multiple-output (MIMO) processor 330 may perform spatial processing (e.g., precoding) on the data symbols, the control symbols, the overhead symbols, and/or the reference symbols, if applicable, and may provide T output symbol streams to T modulators (MODs) 332a through 332t. Each modulator 332 may process a respective output symbol stream (e.g., for OFDM and/or the like) to obtain an output sample stream. Each modulator 332 may further process (e.g., convert to analog, amplify, filter, and upconvert) the output sample stream to obtain a downlink signal. T downlink signals from modulators 332a through 332t may be transmitted via T antennas 334a through 334t, respectively. According to various aspects described in more detail below, the synchronization signals can be generated with location encoding to convey additional information.

At UE 104, antennas 352a through 352r may receive the downlink signals from base station 102 and/or other base stations and may provide received signals to demodulators (DEMODs) 354a through 354r, respectively. Each demodulator 354 may condition (e.g., filter, amplify, down convert, and digitize) a received signal to obtain input samples. Each demodulator 354 may further process the input samples (e.g., for OFDM and/or the like) to obtain received symbols. A MIMO detector 356 may obtain received symbols from all R demodulators 354a through 354r, perform MIMO detection on the received symbols if applicable, and provide detected symbols. A receive processor 358 may process (e.g., demodulate and decode) the detected symbols, provide decoded data for UE 104 to a data sink 360, and provide decoded control information and system information to a controller/processor 380. A channel processor may determine reference signal received power (RSRP), received signal strength indicator (RSSI), reference signal received quality (RSRQ), channel quality indicator (CQI), and/or the like. In some aspects, one or more components of UE 104 may be included in a housing.

On the uplink, at UE 104, a transmit processor 364 may receive and process data from a data source 362 and control information (e.g., for reports comprising RSRP, RSSI, RSRQ, CQI, and/or the like) from controller/processor 380. Transmit processor 364 may also generate reference symbols for one or more reference signals. The symbols from transmit processor 364 may be precoded by a TX MIMO processor 366 if applicable, further processed by modulators 354a through 354r (e.g., for DFT-s-OFDM, CP-OFDM, and/or the like), and transmitted to base station 102. At base station 102, the uplink signals from UE 104 and other UEs may be received by antennas 334, processed by demodulators 332, detected by a MIMO detector 336 if applicable, and further processed by a receive processor 338 to obtain decoded data and control information sent by UE 104. Receive processor 338 may provide the decoded data to a data sink 339 and the decoded control information to controller/processor 340. Base station 102 may include communication unit 344 and communicate to a location server 172 via communication unit 344. Location server 172 may include communication unit 394, controller/processor 390, and memory 392.

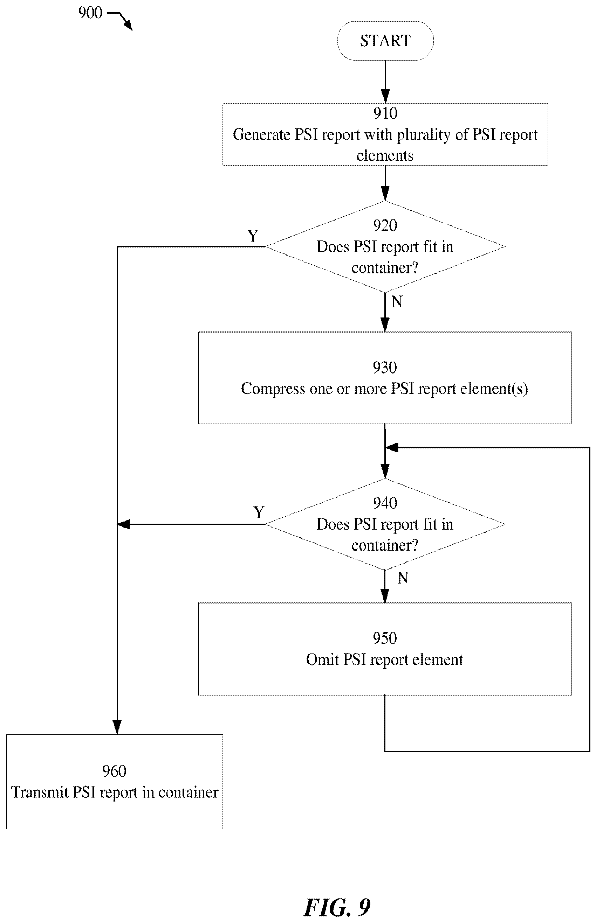

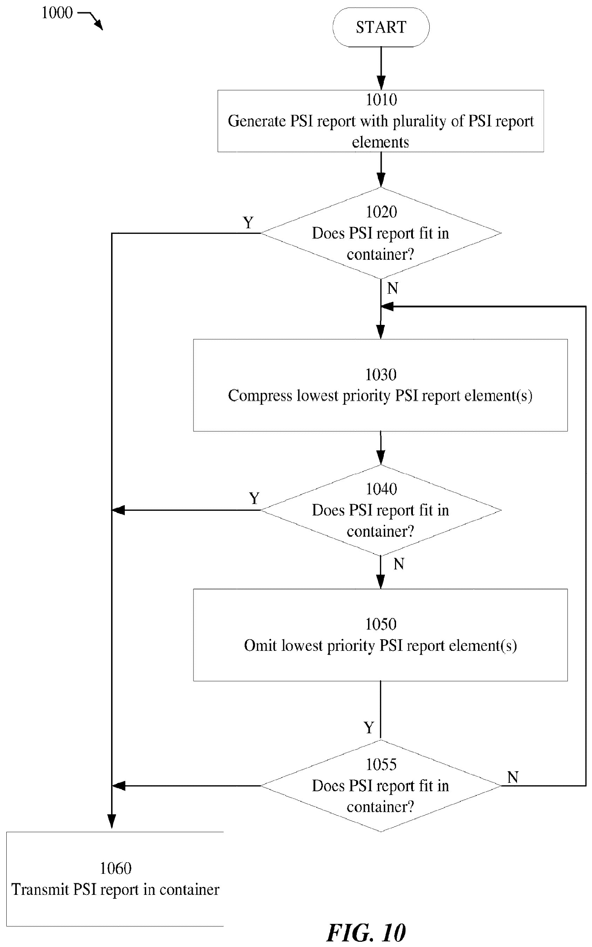

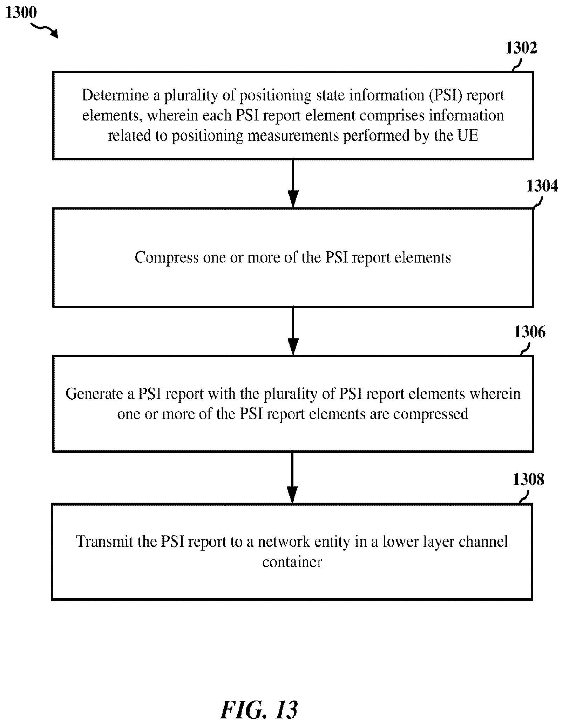

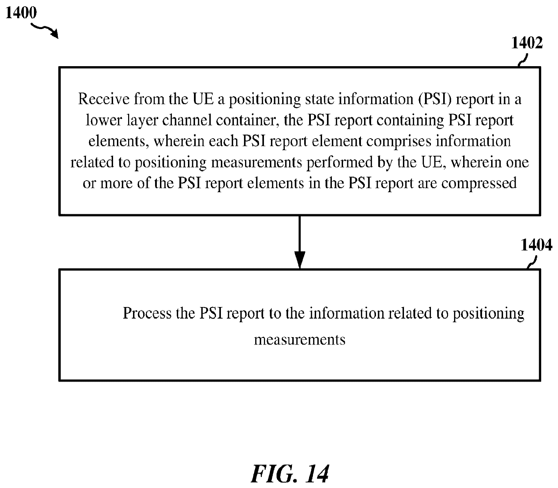

Controller/processor 340 of base station 102, controller/processor 380 of UE 104, controller/processor 390 of the location server 172 and/or any other component(s) of FIG. 3 may perform one or more techniques associated with reducing overhead of positioning state information (PSI) reports transmitted on a lower layer channel, as described in more detail elsewhere herein. For example, controller/processor 340 of base station 102, controller/processor 380 of UE 104, controller/processor 390 of the location server 172 and/or any other component(s) of FIG. 3 may perform or direct operations of, for example, process 900 FIG. 9, process 1000 of FIG. 10, process 1300 of FIG. 13, process 1400 of FIG. 14 and/or other processes as described herein. Memories 342,382, and 392 may store data and program codes for base station 102, UE 104, and location server 172 respectively. In some aspects, memory 342, memory 382, and memory 392 may comprise a non-transitory computer-readable medium storing one or more instructions for wireless communication. For example, the one or more instructions, when executed by one or more processors of the base station 102, the UE 104, or the location server 172 may perform or direct operations of, for example process 900 FIG. 9, process 1000 of FIG. 10, process 1300 of FIG. 13, process 1400 of FIG. 14, and/or other processes as described herein. A scheduler 346 may schedule UEs for data transmission on the downlink and/or uplink.

As indicated above, FIG. 3 is provided as an example. Other examples may differ from what is described with regard to FIG. 3.

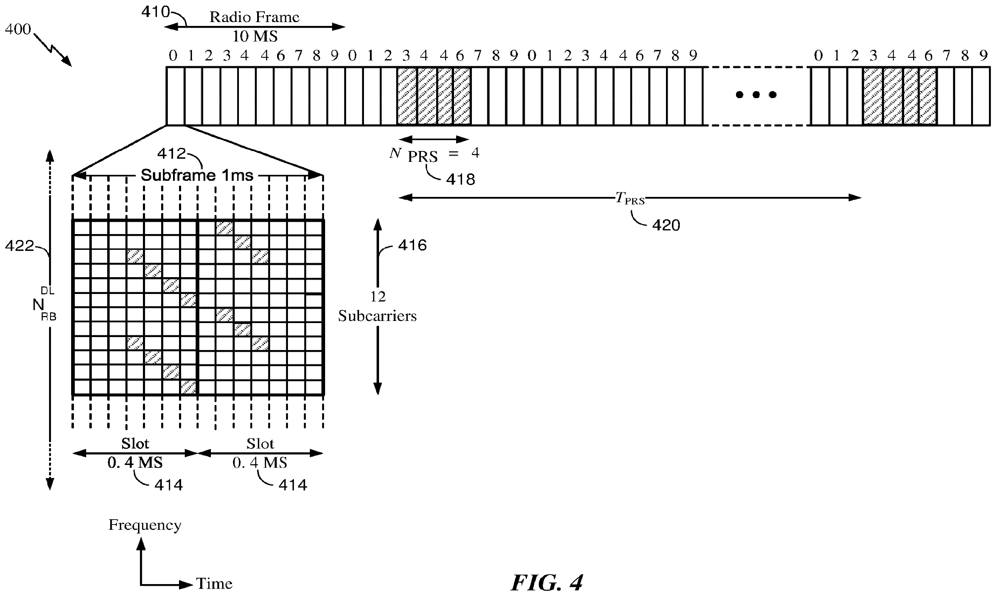

**FIG.** 4 shows a structure of an exemplary subframe sequence 400 with positioning reference signal (PRS) positioning occasions, according to aspects of the disclosure. Subframe sequence 400 may be applicable to the broadcast of PRS signals from a base station (e.g., any of the base stations described herein) or other network node. The subframe sequence 400 may be used in LTE systems, and the same or similar subframe sequence may be used in other communication technologies / protocols, such as 5G NR. In FIG. 4, time is represented horizontally (e.g., on the X axis) with time increasing from left to right, while frequency is represented vertically (e.g., on the Y axis) with frequency increasing (or decreasing) from bottom to top. As shown in FIG. 4, downlink and uplink radio frames 410 may be of 10 millisecond (ms) duration each. For downlink frequency division duplex (FDD) mode, radio frames 410 are organized, in the illustrated example, into ten subframes 412 of 1 ms duration each. Each subframe 412 comprises two slots 414, each of, for example, 0.5 ms duration.

In the frequency domain, the available bandwidth may be divided into uniformly spaced orthogonal subcarriers 416 (also referred to as "tones" or "bins"). For example, for a normal length cyclic prefix (CP) using, for example, 15 kHz spacing, subcarriers 416 may be grouped into a group of twelve (12) subcarriers. A resource of one OFDM symbol length in the time domain and one subcarrier in the frequency domain (represented as a block of subframe 412) is referred to as a resource element (RE). Each grouping of the 12 subcarriers 416 and the 14 OFDM symbols is termed a resource block (RB) and, in the example above, the number of subcarriers in the resource block may be written as

$$N_{SC}^{RB} = 12$$

. For a given channel bandwidth, the number of available resource blocks on each channel 422, which is also called the transmission bandwidth configuration 422, is indicated as $N_{RB}^{DL}$. For example, for a 3 MHz channel bandwidth in the above example, the number of available resource blocks on each channel

$$N_{RB}^{DL} = 15$$

422 is given by . Note that the frequency component of a resource block (e.g., the 12 subcarriers) is referred to as a physical resource block (PRB).

A base station may transmit radio frames (e.g., radio frames 410), or other physical layer signaling sequences, supporting PRS signals (i.e. a downlink (DL) PRS) according to frame configurations either similar to, or the same as that, shown in FIG. 4, which may be measured and used for a UE (e.g., any of the UEs described herein) position estimation. Other types of wireless nodes (e.g., a distributed antenna system (DAS), remote radio head (RRH), UE, AP, etc.) in a wireless communications network may also be configured to transmit PRS signals configured in a manner similar to (or the same as) that depicted in FIG. 4.

A collection of resource elements that are used for transmission of PRS signals is referred to as a "PRS resource." The collection of resource elements can span multiple PRBs in the frequency domain and N (e.g., 1 or more) consecutive symbol(s) within a slot 414 in the time domain. For example, the cross-hatched resource elements in the slots 414 may be examples of two PRS resources. A "PRS resource set" is a set of PRS resources used for the transmission of PRS signals, where each PRS resource has a PRS resource identifier (ID). In addition, the PRS resources in a PRS resource set are associated with the same transmission-reception point (TRP). A PRS resource ID in a PRS resource set is associated with a single beam transmitted from a single TRP (where a TRP may transmit one or more beams). Note that this does not have any implications on whether the TRPs and beams from which signals are transmitted are known to the UE.

PRS may be transmitted in special positioning subframes that are grouped into positioning occasions. A PRS occasion is one instance of a periodically repeated time window (e.g., consecutive slot(s)) where PRS are expected to be transmitted. Each periodically repeated time window can include a group of one or more consecutive PRS occasions. Each PRS occasion can comprise a number $N_{PRS}$ of consecutive positioning subframes. The PRS positioning occasions for a cell supported by a base station may occur periodically at intervals, denoted by a number $T_{PRS}$ of milliseconds or subframes. As an example, FIG. 4 illustrates a periodicity of positioning occasions where $N_{PRS}$ equals 4 418 and $T_{PRS}$ is greater than or equal to 20 420. In some aspects, $T_{PRS}$ may be measured in terms of the number of subframes between the start of consecutive positioning occasions. Multiple PRS occasions may be associated with the same PRS resource configuration, in which case, each such occasion is referred to as an "occasion of the PRS resource" or the like.

A PRS may be transmitted with a constant power. A PRS can also be transmitted with zero power (i.e., muted). Muting, which turns off a regularly scheduled PRS transmission, may be useful when PRS signals between different cells overlap by occurring at the same or almost the same time. In this case, the PRS signals from some cells may be muted while PRS signals from other cells are transmitted (e.g., at a constant power). Muting may aid signal acquisition and time of arrival (TOA) and reference signal time difference (RSTD) measurement, by UEs, of PRS signals that are not muted (by avoiding interference from PRS signals that have been muted). Muting may be viewed as the non-transmission of a PRS for a given positioning occasion for a particular cell. Muting patterns (also referred to as muting sequences) may be signaled (e.g., using the LTE positioning protocol (LPP)) to a UE using bit strings. For example, in a bit string signaled to indicate a muting pattern, if a bit at position $j$ is set to '0', then the UE may infer that the PRS is muted for a $j^{th}$ positioning occasion.

To further improve hearability of PRS, positioning subframes may be low-interference subframes that are transmitted without user data channels. As a result, in ideally synchronized networks, PRS may be interfered with by other cells' PRS with the same PRS pattern index (i.e., with the same frequency shift), but not from data transmissions. The frequency shift may be defined as a function of a PRS ID for a cell or other transmission point (TP) (denoted as $N_{ID}^{PRS}$) or as a function of a physical cell identifier (PCI) (denoted as $N_{ID}^{cell}$) if no PRS ID is assigned, which results in an effective frequency re-use factor of six (6).

To also improve hearability of a PRS (e.g., when PRS bandwidth is limited, such as with only six resource blocks corresponding to 1.4 MHz bandwidth), the frequency band for consecutive PRS positioning occasions (or consecutive PRS subframes) may be changed in a known and predictable manner via frequency hopping. In addition, a cell supported by a base station may support more than one PRS configuration, where each PRS configuration may comprise a distinct frequency offset (*vshift*), a distinct carrier frequency, a distinct bandwidth, a distinct code sequence, and/or a distinct sequence of PRS positioning occasions with a particular number of subframes ($N_{PRS}$) per positioning occasion and a particular periodicity ($T_{PRS}$). In some implementation, one or more of the PRS configurations supported in a cell may be for a directional PRS and may then have additional distinct characteristics, such as a distinct direction of transmission, a distinct range of horizontal angles, and/or a distinct range of vertical angles.

A PRS configuration, as described above, including the PRS transmission/muting schedule, is signaled to the UE to enable the UE to perform PRS positioning measurements. The UE is not expected to blindly perform detection of PRS configurations.

Note that the terms "positioning reference signal" and "PRS" may sometimes refer to specific reference signals that are used for positioning in LTE systems. However, as used herein, unless otherwise indicated, the terms "positioning reference signal" and "PRS" refer to any type of reference signal that can be used for positioning, such as but not limited to, PRS signals in LTE, navigation reference signals (NRS), transmitter reference signals (TRS), cell-specific reference signals (CRS), channel state information reference signals (CSI-RS), primary synchronization signals (PSS), secondary synchronization signals (SSS), etc.

Similar to DL PRS transmitted by base stations, discussed above, a UE may transmit UL PRS for positioning. The UL PRS may be, e.g., sounding reference signals (SRS) for positioning. Using received DL PRS from base stations and/or UL PRS transmitted to base stations, the UE may perform various positioning methods, such as time of arrival (TOA), reference signal time difference (RSTD), time difference of arrival (TDOA), reference signal received power (RSRP), time difference between reception and transmission of signals (Rx-Tx), angle of arrival (AoA), or angle of departure (AoD), etc. In some implementations, the DL PRS and UL PRS are received and transmitted jointly to perform multi-cell positioning measurements, such as multi-Round Trip Time (RTT).

Various positioning technologies rely on DL PRS or UL PRS (or SRS for positioning). For example, positioning technologies that use reference signal include downlink based positioning, uplink based positioning, and combined downlink and uplink based positioning. For example, downlink based positioning includes positioning methods such as DL-TDOA and DL-AoD. Uplink based positioning includes positioning method such as UL-TDOA and UL-AoA. Downlink and uplink based positioning includes positioning method, such as RTT with one or more neighboring base station (multi-RTT). Other positioning methods exist, including methods that do not relay on PRS. For example, Enhanced Cell-ID (E-CID) is based on radio resource management (RRM) measurements.

3GPP Release 16 addresses techniques for positioning with high accuracy, such as using a large bandwidth, beam sweeping in Frequency Range 2 (FR2) that includes frequency bands from 24.25 GHz to 52.6 GHz, angle-based positioning methods such as AoA and AoD, and multi- RTT. Latency, however, is not addressed in depth in Release 16. For example, it is agreed in Release 16 that "UE based positioning," such as DL based positioning, saves latency. Reporting in Release 16, however, is via LPP or RRC, using mechanisms similar to LTE, and does not provide for low latency reporting. For example, LPP and RRC share physical resources and include redundancies, which is advantageous in many aspects, but inherently increases latency.

Low latency, however, is desirable for positioning. For example, latency less than 100ms or less than 10ms in some Industrial Internet of Things (IIoT) cases, may be desirable. In order to reduce latency in positioning, reporting may be performed using lower layer channels, such as layer 1 (L1), which is PHYSICAL (PHY) layer, or layer 2 (L2), which is Medium Access Control (MAC) layer, as opposed to using higher latency LPP or RRC. Lower layer reporting, for example, may be used with on-demand positioning using special physical random access channel (PRACH) sequences. The use of lower layer (L1/L2) reporting to reduce latency is beneficial for communications between the UE 104 and the base station 102. Latency issues between the UE 104 and the LMF 270 may be addressed using additional mechanisms, such as "LMF in the RAN." With LMF in the RAN, the location server is within the same Technical Specification Group (TSG) Radio Access Network (RAN). For examples the location server may be an internal function of the NG-RAN node, the location server may be a logical node within the split gNB, or the location server may a logical node in the NG-RAN, connected to NG-RAN nodes (gNBs and/or ng-eNBs) via an interface, such that it can still receive the report from the UE

Positioning measurements, however, are currently reported through high layer signaling, e.g., via layer 3 (L3), which is RRC or LPP. For example, measurement reports that may be provided through high layer signaling include, e.g., one or multiple TOA, TDOA, RSRP, Rx-Tx, AoA/AoD, multipath reporting (e.g., for ToA, RSRP, AoA/AoD), motion states (e.g., walking, driving, etc.,) and trajectories, and report quality indication.

It may be desirable to report positioning measurements, which are sometimes referred to herein as Positioning State Information (PSI) in a lower layer, e.g., L1/L2, to reduce latency. Positioning State Information may alternatively be referred to CSI report for positioning, CSI report with positioning measurements, measurement location report, positioning measurement report, positioning information report, location information report, CSI report with location information. When reporting PSI with lower layer signaling, latency may advantageously be reduced. It is also desirable, however, to reduce overhead associated with reporting PSI with lower layer signaling.

In NR, Channel State Information (CSI) may be reported by a UE. CSI is not related to positioning but provides a mechanism through which a UE reports various measured radio channel quality parameters to a network, e.g., gNB. For example, a CSI report may include several different radio channel parameters, such as Channel Quality Indicator (CQI), Pre-coding Matrix Indicator (PMI), Rank Indicator (RI), Layer Indicator (LI), L1-RSRP.

The parameters of the CSI report(s) are encoded in Uplink Control Information (UCI) and mapped to physical uplink shared channel (PUSCH) or physical uplink control channel (PUCCH). The encoding format used for the reported parameters may differ depending both on the physical channel used and the frequency-granularity of the CSI report(s). The different encoding schemes may be used, for example, because the payload size of the CSI may vary based on the UE's selection of CRI and RI. For example, the codebook size for PMI reporting is different for different ranks, especially for Type II CSI reporting and subband PMI reporting in general, which may vary in size drastically. Similarly, because one codeword is used up to rank-4 and two codewords are used for higher ranks, the number of CQI parameters (which is given per codeword) included in a CSI report may vary depending on the selection of rank.

For PUCCH-based CSI reporting with wideband frequency-granularity, the variation in size of the PMI/CQI payload depending on the selected rank is not too large and, therefore, a single packet encoding of all CSI parameters in UCI is used. The receiving base station, however, needs to know the payloads size of the UCI in order to decode the transmission. Accordingly, for CSI, the UCI is padded with a number of dummy bits corresponding to the difference between the maximum UCI payload size (i.e. corresponding to the RI which results in the largest PMI/CQI overhead) and the actual payload size of the CSI report. By padding the UCI with dummy bits, the payload size is fixed irrespective of the UE's RI selection. If the UCI were not padded with dummy bits, the base station not know the UCI payload size and would have to attempt to decode the CSI report transmissions for all possible UCI payload sizes, which is not feasible.

However, for PUCCH-based CSI with subband frequency-granularity as well as PUSCH-based CSI reporting, if the CSI report is always padded to the worst-case UCI payload size, the resulting overhead would be too large. For these cases, the CSI content is instead divided into two CSI Parts, referred to as CSI Part1 and CSI Part 2. CSI Part 1 has a fixed payload size (and can be decoded by the gNB without prior information), while CSI Part 2 has a variable payload size. Information about the payload size of CSI Part 2 can be derived from the CSI parameters included in CSI Part 1. Accordingly, the base station may first decode CSI Part 1 to obtain a subset of the CSI parameters, and based on these CSI parameters the payload size of CSI Part 2 may be inferred. The base station may then decode CSI Part 2 to obtain the remainder of the CSI parameters.

Additionally, for Type II CSI feedback on PUSCH, CSI Part 2 may contain an indication of the number of "non-zero wideband amplitude coefficients" per layer. The wideband amplitude coefficient is part of the Type II codebook and depending on if a coefficient is zero or not, the PMI payload size will vary. Accordingly, CSI Part 1 may include an indication of the number of non-zero coefficients.

For beam reporting of L1-RSRP, CSI may also use a single part encoding since the payload size does not vary.

Positioning state information (PSI) is different than CSI, as the type of information for positioning measurements included in a PSI report may vary greatly depending on the type of positioning measurement performed, the number of positioning measurements, the type of positioning method being supported, etc. For example, the number of TRPs that a UE may detect or report for positioning depends on the UE's selection, availability to measure PRS, etc.

The types of positioning measurements or information that may be included in a PSI report may include, e.g., timing measurements, such RSTD, UE Rx-Tx, TOA, etc., energy or power measurements, such as RSRP, angle measurements, such as RSRP, quality metrics, velocity and/or trajectory measurements, reference TRP, multipath information, line of sight (LOS) or non-line of sight (NLOS) factors, signal to interference noise ratio (SINR), and time stamps. It should be understood that this list is not exhaustive, and that other types of positioning measurements or information may be desirable to include in a PSI report. Each positioning measurements may be reported as one or more vectors, e.g., each vector being a set of one or more measurements associated with at least one of a same time, a same TRP, same beam, same frequency band, same antenna, or a combination thereof. Thus, for example, an RSTD vector may be indicated as {RSTD1, RSTD2 ... RSTDN) which are all associated with a timestamp1, and may be from the same or different TRPs, since there is the case that the UE reports multiple RSTDs for the same TRPs. Accordingly, a PSI report may include a variety of different types of positioning measurement vectors, which may include: RSTD vector and time-stamp, UE Rx-Tx vector and time-stamp, RSRP vector and time-stamp, Quality Metric vector and time-stamp, Velocity vector and time-stamp, TOA vector and time-stamp, Multipath vector and time-stamp, LOS/NLOS vector and time-stamp, SINR vector and time-stamp.

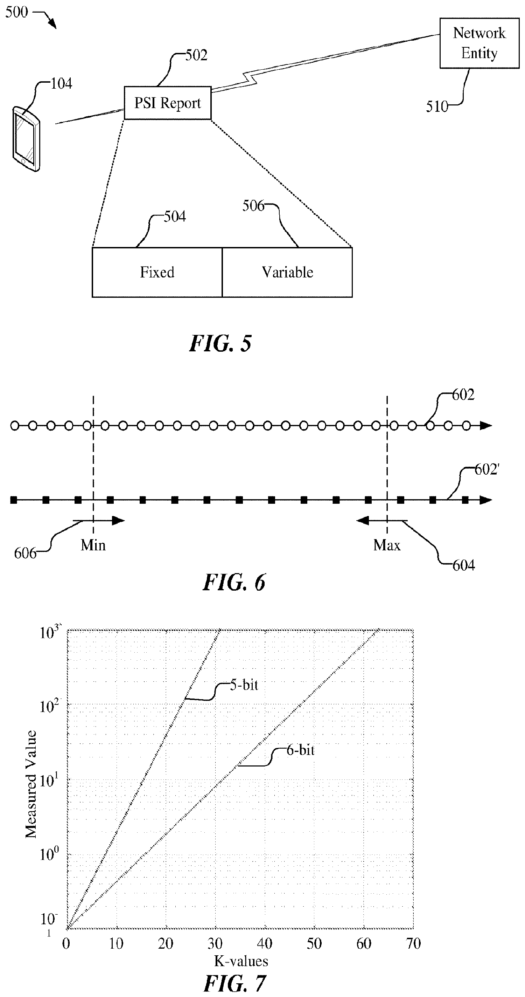

**FIG. 5** is a block diagram 500 illustrating a UE 104 and network entity 510 configured to respectively transmit and receive on a lower layer channel a PSI report 502 with one or more PSI report elements including positioning measurements, according to an aspect of the present disclosure. As illustrated in FIG. 5, the UE 104 may transmit a prepared PSI report 502 to a network entity 510. The network entity 510 that receives the PSI report may be, e.g., a base station, such as base station 102 or a location server such as location server 172 or LMF 270, or a sidelink UE. The PSI report 502 is transmitted in a lower layer channel container, and may contain one or more PSI report elements, each of which includes information related to positioning measurements performed by the UE.

As illustrated, the PSI report 502 may be divided into two or more parts, with a at least one part having a constant size, and the remaining parts having variable size. For example, as illustrated in FIG. 5, a first part 504 of the PSI report 502 includes PSI report elements or information having a fixed size and a second part 506 of the PSI report 502 includes PSI report elements that may have variable size. In some implementations, the UE 104 may include in the first part 504 of the PSI report 502 reporting information that does not change in size independent of what the UE reports, e.g., reporting configuration of what is included in part 2. For example, the first part 504 may include an indication of the type of positioning measurement vectors included in the second part 506 and may also indicate the size of each positioning measurement vector. For example, the first part 504 may indicate the types of positioning measurement vectors included as a bit string of X bits, where each bit corresponds to a specific type of positioning measurement vector and may indicate inclusion with a "1" and exclusion with a "0." Additionally, X numbers may also be reported in the first part 504, where each number corresponds to the size of each of the X positioning measurement vectors.

The PSI report may be transmitted on a lower layer (L1/L2) uplink channel, e.g., on a physical layer (PUSCH or PUCCH), on a MAC layer (Medium Access Control - Control Element (MAC-CE) block), or a physical sidelink shared control channel (PSSCH). The size of a PSI report may vary depending on numerous factors, such as the type of positioning measurement vectors, the number of positioning measurements, the number of TRPs selected or available, etc. Because at least a portion of the PSI report may vary in size, the PSI payload may not fit in a channel container scheduled for the PSI report, e.g., in the PUSCH, PUCCH, PSSCH, or MAC-CE, i.e., the code rate will be too large or even the uncoded systematic bits will not fit.

Accordingly, one or more PSI report elements may be compressed so that the PSI report may fit within the channel container. Some or all of the positioning measurement information, e.g., PSI report elements, of the PSI report may be compressed using different compression configurations, e.g., by reducing the bit width, scaling, or altering the granularity, the maximum value, minimum value of reported positioning measurements, or a combination thereof.

In one implementation, compression of one or more PSI report elements, including positioning measurement information, may be achieved by increasing the granularity, or step size, of the positioning measurement information. For example, positioning measurement information with a granularity of 1, may use 8 bits (which can represent 256 values) to report a value between 0 and 255 (e.g., 1=256/256. By increasing the granularity of the reported positioning measurement information, e.g., to 16, 4 bits (which can represent 16 values) may be used to report the same values between 0 and 255 (e.g., 16=256/16). Thus, by increasing the granularity for the positioning measurement information in a PSI report element, the PSI report element may be compressed.

In one implementation, compression of one or more PSI report elements, including positioning measurement information, may be achieved by decreasing a maximum value of the positioning measurement information that may be reported. For example, for some types of positioning measurements large positioning measurement values are unlikely or unnecessary. With RSTD, for example, is likely that the time difference between received signals will be small, and accordingly, the maximum value for RSTD may be decreased. For example, (assuming a granularity of 1, as discussed above), positioning measurement information with possible values between 0 and 255 may be represented with 8 bits (which can represent 256 values). By decreasing the maximum value of the positioning measurement information to 15, e.g., so that the possible values reported are between 0 and 15, 4 bits (which can represent 16 values) may be used. Thus, decreasing the maximum value of the positioning measurement information in a PSI report element, the PSI report element may be compressed.

Similarly, in one implementation, compression of one or more PSI report elements, including positioning measurement information, may be achieved by increasing a minimum value of the positioning measurement information that may be reported. For some types of positioning measurements small positioning measurement values are unlikely or unnecessary. For example, (assuming a granularity of 1, as discussed above), positioning measurement information with possible values between 0 and 255 may be represented with 8 bits (which can represent 256 values). By increasing the minimum value of the positioning measurement information to between 239 and 255, 4 bits (which can represent 16 values) may be used. Thus, increasing the minimum value of the positioning measurement information in a PSI report element, the PSI report element may be compressed.

**FIG. 6,** by way of example, illustrates an example of different ways to compress positioning measurement information 602. The positioning measurement information 602 generally represents any type of positioning information that may be desired to be included in a PSI report. As illustrated with white circles, the positioning measurement information 602 has a granularity or step size between data points. Granularity may be increased, e.g., as illustrated by black squares on positioning measurement information 602', which reduces the data points to be reported. Thus, the positioning measurement information 602' may be represented with less overhead than positioning measurement information 602. Additionally or alternatively, the maximum value of positioning measurement information 602 or 602' may be decreased, as indicated by arrow 604 and/or the minimum value of positioning measurement information 602 or 602' may be increased, as indicated by arrow 606, to reduce the overhead of the positioning measurement information 602 or 602'.

In one implementation, compression of one or more PSI report elements, including positioning measurement information, may be achieved by scaling the positioning measurement information that may be reported. For example, linear scaling may be used, similar to increasing granularity, to reduce the number of data points in the positioning measurement information in a PSI report element, thereby compressing the PSI report element. Similarly, logarithmic scaling may be used to reduce the number of data points in the positioning measurement information in a PSI report element, thereby compressing the PSI report element. While various forms of logarithmic scaling are possible and may be used, an example of logarithmic scaling may use:

$$Y = C \cdot (1 + x)^K ; \qquad \text{eq. 1}$$

$$K_{\max} = 2^{numbits} - 1; \qquad \text{eq. 2}$$

$$x = 10^{\frac{\log 10(D) - \log 10(C)}{K_{\max}} - 1}. \qquad \text{eq. 3}$$

Where numbits represents the number of bits to be used to report the positioning measurement information, i.e., the overhead, C is the minimum value to be reported, e.g., 0.01m, and D is the maximum value to be reported, e.g., 1000m. FIG. 7 is a semi-logarithmic plot illustrating an example of the effect of logarithmic scaling on measured values (shown the Y axis), where the K value is shown on the X axis, which may be used to compress PSI report elements.

The configuration, including the type of compression and amount of compression, to be used to compress positioning measurement in the PSI report may be provided to the UE 104 by a network entity, such a serving base station or location server. In some implementations, the configuration used to compress positioning measurement in the PSI report, including the type of compression and amount of compression, may be selected by the UE 104 and may be provided to the network entity by the UE 104 in the PSI report, such as first part 504 of the PSI report 502, shown in FIG. 5.

The compression configurations may include, e.g., the type of compression used, e.g., increasing granularity, linear or logarithmic scaling, decreasing the maximum value, increasing the minimum value, a combination thereof or different compression schemes, and the amount of compression. Further, the compression configurations may be based on the positioning measurement information to be reported. For example, in one implementation, a compression configuration may be separately selected for each type of type of positioning measurement. For example, a first compression configuration may be selected for RSTD positioning measurements, while a second (different) compression configuration may be selected TOA positioning measurements.

In another implementation, compression configurations may be selected for different classes of positioning measurements. For example, a first compression configuration may be selected for all timing related positioning measurements, a second compression configuration may be selected for all angle related positioning measurements, and a third compression configuration may be selected for all power based positioning measurements, i.e., any energy based measurement such as RSRP, SINR, RSSI, etc.

In another implementation, sets of compression configurations may be preconfigured. For example, a set of compression configurations may be preconfigured to provide high compression, i.e., a large amount of compression, and a set of compression configurations may be preconfigured to provide low compression, i.e., less compression than the high compression configuration. The sets of compression configuration, for example, may be stored in tables that may be stored and accessed in memory in the UE or may be transmitted to the UE by a network entity. The sets of compression configurations may be selected by the UE or a network entity, for each type of positioning measurement or for each class of positioning measurement.

In some implementations, the compression configuration, including the type of compression and amount of compression, to be used may be based on the type of lower layer channel that the PSI report is to be transmitted. For example, if the PSI report is to be transmitted on a physical layer channel, such as PUCCH, a high level of compression may be used, e.g., higher than if the PSI report is to be transmitted using PUSCH or PSSCH. Moreover, the compression configuration, including the type of compression and amount of compression, to be used may be based on the format of the lower layer channel that the PSI report is to be transmitted. For example, with a short format PUCCH, a higher level of compression may be used than with a long format PUCCH, as the short format PUCCH has fewer bits than the long format.

In some implementations, the PSI report may not fit a channel container scheduled for the PSI report, even after compressing one or more PSI report elements. In such an instance, one or more PSI report elements may be omitted from the PSI report so that the PSI report fits within the channel container. For example, the PSI report elements may be ordered in a predetermined fashion, e.g., according to predetermined priority based rules, so that the lower priority PSI elements in the variable-sized part or the report will be omitted from the PSI report before high priority elements. For example, the order of the PSI report elements may be based on priorities giving to the different types or classes of positioning measurements. For example, the PSI report elements may be mapped to the channel container according to the predetermined one or more priority rules, where higher priority PSI report elements are mapped first, followed by successively lower priority PSI report elements. If the resulting code rate of the PSI report is above a threshold, e.g., based on the size of the channel container, the lowest priority PSI report element is omitted. In some implementations, the ordering of the PSI report elements based on, e.g., a predetermined priority based rules, may be performed prior to compressing PSI report elements.

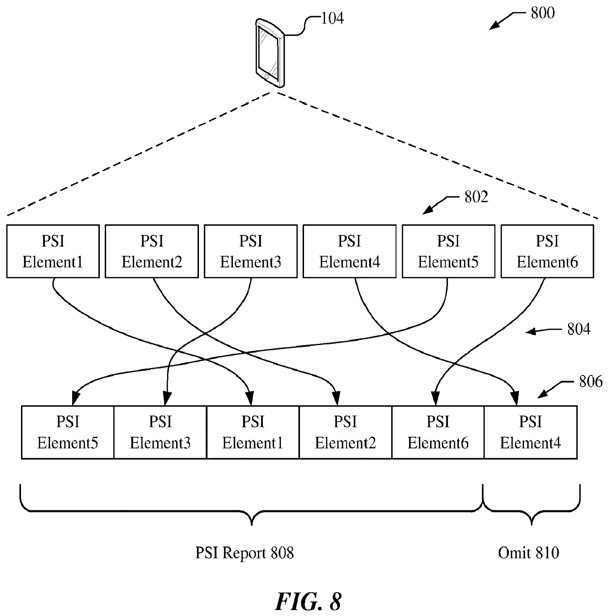

FIG. 8 is a block diagram 800 illustrating a UE 104 configured to order and omit low priority PSI report elements in a PSI report to be transmitted on a lower layer channel according to one aspect of the present disclosure. As illustrated, the UE 104 may determine a plurality of PSI report elements 802. Each PSI report element, for example, includes information related to positioning measurements performed by the UE 104. As discussed above, a PSI report element may include, e.g., RSTD vector(s), UE Rx-Tx vector(s), RSRP vector(s), positioning measurement quality metrics, velocity vector(s), reference TRP, TOA vector(s), multipath vectors, LOS/NLOS factors, SINR vector(s), or time-stamp(s). Further, as discussed above, one or more of the PSI report elements may be compressed. As illustrated by arrows 804, the PSI report elements are ordered by the UE 104 according to predetermined priority based rules, resulting in ordered PSI elements 806, with highest priority PSI report elements shown on the left, and lowest priority PSI report elements shown on the right. In some implementations, one or more PSI report elements may be compressed prior to or after ordering of the PSI report elements shown by arrow 804.

In the present example, even with one or more of the PSI report elements compressed, the size of the ordered PSI report elements is larger than a lower layer channel container, e.g., a PUSCH, PUCCH, or PSSCH, or in a MAC-CE, in which the PSI report is to be transmitted. Accordingly, the UE 104 generates the PSI report 808 including the higher priority PSI report elements, one or more of which are compressed, and omits 810 the lower priority PSI element, e.g., PSI element4, from the PSI report. When omitting a PSI report element, the UE 104 may omit all of the positioning measurement information in that PSI report element. The PSI report elements may be mapped to the channel container according to the one or more priority rules, where higher priority PSI report elements are mapped first, followed by successively lower priority PSI report elements. If the resulting size of the PSI report is above the size of the channel container, the lowest priority PSI report element may be omitted.

Thus, in one implementation, the UE 104 may compress one or more PSI report elements and determine that the size of the resulting PSI report is larger than the lower layer channel container. The UE 104 may then omit at least one PSI report element from the PSI report so that the remaining PSI report elements fit within the container.

FIG. 9 is a flow chart illustrating a process in which the UE may compress and omit one or more PSI report elements so that the resulting PSI report fits within the lower layer channel container. As illustrated, at block 910, the UE may generate a PSI report using a plurality of PSI report elements. Each of the PSI report elements, for example, includes information related to positioning measurements performed by the UE. In some implementations, the UE may generate the report by ordering the PSI report elements according to a predetermined priority order.

At block 920, the UE determines if the PSI report fits in the lower layer channel container. For example, if the resulting code rate of the PSI report is below a threshold, e.g., based on the size of the channel container, the PSI report is determined to fit within the container, and the process flows to block 960. On the other hand, if the resulting code rate of the PSI report is above a threshold, e.g., based on the size of the channel container, the PSI report does not within the container, and the process flows to block 930.

At block 930, one or more of the PSI report elements is compressed, e.g., based on a compression configuration provided by a network entity or selected by the UE. For example, the positioning measurement information within one or more of the PSI report elements may be compressed by increasing granularity, linear or logarithmic scaling, decreasing the maximum value, increasing the minimum value, a combination thereof or different compression schemes. In some implementations, all of the PSI report elements may be compressed. In other implementations, a subset of PSI report elements may be compressed, such as all PSI report elements except the highest priority report element, if the PSI report elements have been ordered based on a predetermined priority order. In another implementation, a subset of PSI report elements may be compressed with a first compression level, with the remaining subset of PSI report elements may be compressed at a different compression level, e.g., the highest priority report element may have a lower compression than the remaining PSI report elements.

At block 940, the UE determines if the PSI report with one or more compressed PSI report elements fits in the lower layer channel container. For example, if the resulting code rate of the PSI report is below a threshold, e.g., based on the size of the channel container, the PSI report is determined to fit within the container, and the process flows to block 960. On the other hand, if the resulting code rate of the PSI report is above a threshold, e.g., based on the size of the channel container, the PSI report does not within the container, and the process flows to block 950.

At block 950, one or more PSI report elements are omitted from the PSI report. For example, if the PSI report elements have not already been ordered, the UE may order the PSI report elements according to a predetermined priority order, and as discussed above, the lowest priority PSI report element may be omitted from the PSI report. After omitting a PSI report element, the process flows back to block 940, in which the UE determines if the PSI report with one or more compressed PSI report elements (and omitted one or more PSI report elements) fits in the lower layer channel container. The process repeats until the PSI report fits within the lower layer channel container and at block 960, the UE transmits the resulting PSI report to a network entity in the lower layer channel container.

In another implementation, the UE 104 may iteratively compress and omit PSI report elements until the resulting PSI report is larger than the lower layer channel container.

FIG. 10 is a flow chart illustrating a process in which the UE may iteratively compresses and omits one or more PSI report elements so that the resulting PSI report fits within the lower layer channel container. As illustrated, at block 1010, the UE may generate a PSI report using a plurality of PSI report elements. Each of the PSI report elements, for example, includes information related to positioning measurements performed by the UE. In some implementations, the UE may generate the report by ordering the PSI report elements according to a predetermined priority order.

At block 1020, the UE determines if the PSI report fits in the lower layer channel container. For example, if the resulting code rate of the PSI report is below a threshold, e.g., based on the size of the channel container, the PSI report is determined to fit within the container, and the process flows to block 1060. On the other hand, if the resulting code rate of the PSI report is above a threshold, e.g., based on the size of the channel container, the PSI report does not within the container, and the process flows to block 1030.

At block 1030, if the PSI report elements have not already been ordered, the UE may order the PSI report elements according to a predetermined priority order, and a lowest priority PSI report element(s) is compressed, e.g., based on a compression configuration provided by a network entity or selected by the UE. For example, the positioning measurement information within the lowest priority PSI report element may be compressed by increasing granularity, linear or logarithmic scaling, decreasing the maximum value, increasing the minimum value, a combination thereof or different compression schemes. In some implementations, more than one of the lowest priority PSI report elements may be compressed, e.g., the two lowest priority PSI report elements may be compressed. In another implementation, the lowest priority PSI report element may be compressed with a first compression level and the second lowest priority PSI report may be compressed at a different compression level, e.g., the lowest priority report element may have a higher compression than the second lowest priority PSI report element.

At block 1040, the UE determines if the PSI report with one or more compressed PSI report elements fits in the lower layer channel container. For example, if the resulting code rate of the PSI report is below a threshold, e.g., based on the size of the channel container, the PSI report is determined to fit within the container, and the process flows to block 1060. On the other hand, if the resulting code rate of the PSI report is above a threshold, e.g., based on the size of the channel container, the PSI report does not within the container, and the process flows to block 1050.

At block 1050, the lowest PSI report elements is omitted from the PSI report. For example, the PSI report elements may be mapped to the channel container according to the predetermined one or more priority rules, where higher priority PSI report elements are mapped first, followed by successively lower priority PSI report elements. If the resulting code rate of the PSI report is above a threshold, e.g., based on the size of the channel container, the lowest priority PSI report element is omitted.

At block 1055, the UE determines if the PSI report with one or more compressed PSI report elements (and the lowest PSI report element omitted) fits in the lower layer channel container. For example, if the resulting code rate of the PSI report is below a threshold, e.g., based on the size of the channel container, the PSI report is determined to fit within the container, and the process flows to block 1060. On the other hand, if the resulting code rate of the PSI report is above a threshold, e.g., based on the size of the channel container, the PSI report does not within the container, and the process flows to block 1030, where the lowest priority PSI report element(s) in the remaining PSI report elements is compressed. The process repeats block 1040, 1050, and 1055, until the PSI report fits within the lower layer channel container and at block 1060, the UE transmits the resulting PSI report to a network entity in the lower layer channel container.

In some implementations, the UE may be configured to compress all of the PSI report elements regardless of whether the PSI report elements fit within the lower layer channel container. For example, the UE may use a high level of compression for all PSI report elements, a low level of compression for all PSI report elements, or different compression levels for different types of positioning measurements, the class of positioning measurements or the priority level of the PSI report elements.

In some implementations, the UE may be configured to compress the positioning measurement information in PSI report elements based on the type of positioning method or positioning session for which the positioning measurements were obtained. For example, the UE may use a high level of compression for some positioning measurements and a low level of compression for other positioning measurements depending on the position method being performed. By way of example, for a TDOA positioning method, information for RSTD positioning measurements may be compressed at a low level of compression, while information for RSRP may be compressed at a higher level, as RSTD measurements are more relevant to TDOA than RSRP measurements. Conversely, for an AoD positioning method, information for RSRP positioning measurements may be compressed at a low level of compression, while information for RSTD may be compressed at a higher level, as RSRP measurements are more relevant to AoD than RSTD measurements. For an multi-RTT positioning method, information for Rx-Tx positioning measurements may be compressed at a low level of compression, while information for RSRP may be compressed at a higher level, as Rx-Tx measurements are more relevant to multi-RTT than RSRP measurements. For hybrid positioning measurements, multiple types positioning measurements may be treated similarly. For example, for TDOA and multi-RTT positioning methods, information for Rx-Tx and RSTD positioning measurements may be compressed at a low level of compression, while information for RSRP may be compressed at a higher level, as Rx-Tx and RSTD measurements are more relevant to multi-RTT and TDOA than RSRP measurements.

Additionally, if one or more of the PSI report elements include a positioning fix determined by the UE, e.g., in a UE based positioning method, the PSI report element may be compressed by reporting the positioning fix with distances, directions, and/or coordinates relative to a reference or serving TRP or base station, which has a known position.

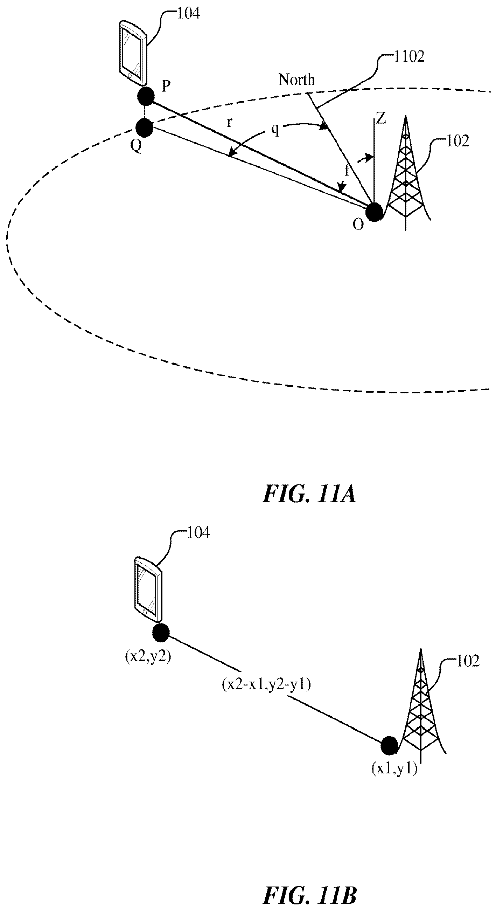

For example, the UE may report a positioning fix using polar coordinates relative to the reference or serving base station. FIG. 11A, for example, illustrates a UE 104 and serving base station 102, where the position fix of the UE 104 is provide using polar coordinates. As illustrated, the position P of the UE 104 relative to the position O of the serving base station 102 may be reported as a distance $\rho$ between O and P, an azimuthal angle $\theta$ relative to an known axis 1102 (e.g., North) and a line segment defined by the projection of point P on the plane (point Q) and the point O, and an elevation angle $\phi$ between the Z axis and the line segment from point O to P. Thus, the position fix of the UE 104 may be provided relative to the known position of the base station 102 as distance $\rho$, azimuth angle $\theta$, and elevation angle $\phi$. In some implementations, the position fix may be reported as a trigonometric function of the angles $\theta$, $\phi$ such as the cos or sin of the angle or another function, such as $\cos \theta'$ and $\sin \theta' \sin \phi'$.

**FIG. 11B** illustrates a UE 104 and serving base station 102, where the position fix of the UE 104 is provide using cartesian coordinates. As illustrated, the position (x2,y2) of the UE 104 may be provided as a difference in x, y, (and z) from the known position of the serving base station 102 (x1,y1), e.g., the position may be (x2-x1,y2-y1). In some implementations, the maximum possible value may be configured to control the overhead. For example, the position fix may be compressed by reducing a number of bits used for distance values greater than a maximum value.

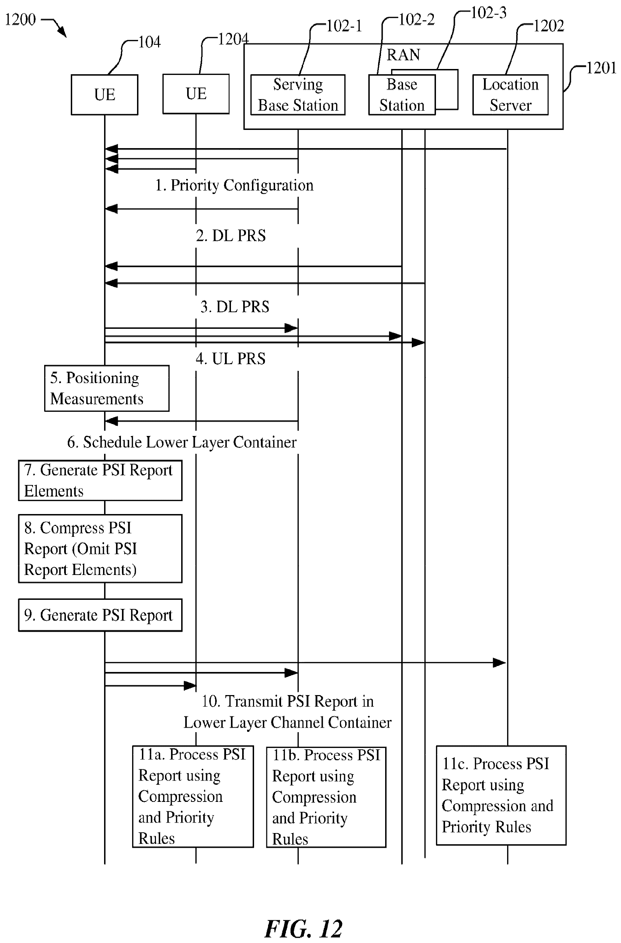

**FIG. 12** is a message flow 1200 with various messages sent between components of the communication system 100 depicted in FIG. 1, illustrating the reduction in overhead by compressing PSI report elements in a PSI report that is transmitted on a lower layer channel, according to the disclosure herein. Location server 1202 may be, e.g., location server 172 shown in FIG. 1 or LMF 270 shown in FIG. 2. The serving base station 102-1 and other base stations 102-2, 102-3 are sometimes collectively referred to as base stations 102. UE 1204 may be a UE that is in sidelink communication with the UE 104. The UE 104 may be configured to perform UE assisted positioning or UE based positioning, using downlink based positioning, uplink based positioning or combined downlink and uplink based positioning. In the message flow 1200, it is assumed, unless otherwise stated, that the UE 104 and location server 1202 may communicate using lower layer channels as well as other mechanisms, such as LMF in the RAN, as discussed above, to reduce latency. For example, the location server 1202 may be within the RAN 1201, e.g., as an internal function of an NG-RAN node, such as serving base station 102-1, the location server 1202 may be a logical node within the split gNB, e.g., serving base station 102-1, or the location server may be a logical node in the NG-RAN 1201, connected to NG-RAN nodes, e.g., serving base station 102-1 and neighboring base stations 102-2 and 102-3 via an interface, such that it can still receive the report from the UE. It should be understood that preliminary or additional conventional stages not shown in FIG. 12 may be performed, such as capability requests and responses, requests for and providing assistance data, etc.

At stage 1, the UE 104 may receive a configuration compression of positioning measurement information in PSI report elements. The configuration, e.g., may be provided by either serving base station 102-1, the location server 1202, or the sidelink UE 1204.

At stage 2 and stage 3, the UE 104 receives DL PRS from serving base station 102-1 and neighboring base stations 102-2 and 102-3.

At stage 4, the UE 104 may optionally transmit UL PRS or SRS for positioning, to the base stations 102.

At stage 5, the UE 104 may perform DL positioning measurements for one or more positioning methods based on the DL PRS received at stages 2 and 3, UL positioning measurements for one or more positioning methods based on the UL PRS transmitted at stage 4, or DL and UL positioning measurements for one or more positioning methods based on the DL PRS received at stages 2 and 3 and the UL PRS transmitted at stage 4. In some implementations, the UE 104 may perform multiple positioning measurements, e.g., the same type of positioning measurements at different times and/or different types of positioning measurements at the same time or at different times. By way of example, the positioning information obtained by UE 104 from the positioning measurements include one or more of, timing measurements such as RSTD, UE Rx-Tx, TOA, etc., angle measurements, such as RSRP, power or energy measurements such as RSRP, quality metrics, velocity and/or trajectory measurements, reference TRP, multipath information, LOS/NLOS factors, SINR, and time stamps. The positioning measurements may be for one or more positioning methods for which the UE 104 is configured, such as TDOA, AoD, multi-RTT, hybrid positioning methods, etc.

At stage 6, the UE 104 may receive, e.g., from the serving base station 102-1 a schedule or grant for a lower layer container in which the PSI report is to be transmitted by the UE 104.

At stage 7, the UE 104 generates a plurality PSI reports elements based on the positioning measurements from stage 5. For example, as discussed above, each PSI report element may include information from a positioning measurement, as one or more vectors, which may include, e.g., RSTD vector and time-stamp, UE Rx-Tx vector and time-stamp, RSRP vector and time-stamp, Quality Metric vector and time-stamp, Velocity vector and time-stamp, TOA vector and time-stamp, Multipath vector and time-stamp, LOS/NLOS vector and time-stamp, SINR vector and time-stamp. The UE 104 may order the PSI report elements, e.g., according to predetermined priority based rules.

At stage 8, the UE 104 may compress one or more PSI report elements, e.g., by increasing granularity, linear or logarithmic scaling, decreasing the maximum value, increasing the minimum value, a combination thereof or different compression schemes, as described herein. For example, the UE 104 may compress all of the PSI report elements regardless of whether the PSI report elements fit within the lower layer channel container. In other implementations, the UE 104 may determine if the PSI report fits within the lower layer channel container and compress one or more PSI report elements if it does not. The UE 104 may further omit one or more PSI report elements, e.g., the lowest priority PSI report elements, in addition to compressing one or more PSI report elements. For example, once the UE 104 determines the PSI report does not fit in the lower layer channel container, the UE 104 may compress one or more PSI report elements, and if the PSI report still does not fit in the lower layer channel container, one or more PSI report elements may be omitted until the PSI report fits in the lower layer channel container. In another example, PSI report elements may be iteratively compressed and omitted until the PSI report fits in the lower layer channel container. For example, once the UE 104 determines the PSI report does not fit in the lower layer channel container, the UE 104 may compress a PSI report element, and if the PSI report still does not fit in the lower layer channel container, the UE 104 may omit the PSI report element. If the PSI report still does not fit in the in the lower layer channel container, the UE 104 may iteratively repeat compressing and omitting PSI report elements until the PSI report fits in the lower layer channel container. The PSI report element with a position fix may be compressed by providing the position relative to a known position of the reference or serving base station.

At stage 9, the UE 104 generates a PSI report based on the compressed and remaining PSI report elements. In some implementations, the PSI report may include an indication, in a first part with fixed size, if a PSI report element is compressed or if PSI report elements are omitted. Additionally, in instances where the UE 104 determines the compression configuration, the PSI report may include the compression configuration, such as the type of compression and level of compression used by the UE 104, e.g., in a first part with fixed size.

At stage 10, the UE 104 transmits the PSI report in the lower layer channel container, e.g., to the sidelink UE 1204, the serving base station 102 or the location server 1202 on an uplink low layer (e.g., L1 or L2) channel. For example, the UE 104 may transmit the PSI report using a PHY layer, e.g., using PUSCH, PUCCH, PSSCH, or on a MAC layer, using a MAC-CE block. Transmission of the PSI report on the lower layer channel, advantageously reduces latency compared to transmission, e.g. on an RRC channel, while compression of the position measurement information contained in the PSI report reduces overhead.

At one of stage 11a, stage 11b, and stage 11c, the PSI report is processed, e.g., by the sidelink UE 704, the serving base station 102-1 or the location server 702, respectively, using the compression configuration used, e.g., as provided in stage 1 or received in stage 10. In some implementations, the sidelink UE 704 may forward the PSI report to one of serving base station 102-1 or the location server 702 for processing

FIG. 13 shows a flowchart for an exemplary method 1300 for wireless communications for a UE, such as UE 104, performed by the UE, e.g., to reduce overhead by compressing PSI report elements in a PSI report that is transmitted on a lower layer channel, according to the disclosure herein.

At block 1302, the UE determines determine a plurality of positioning state information (PSI) report elements, wherein each PSI report element comprises information related to positioning measurements performed by the UE, e.g., as discussed at stage 7 of FIG. 12. At block 1304, one or more of the PSI report elements are compressed, e.g., as discussed in FIGs. 6, 7, 9, 10, 11A, 11B, and at stage 8 of FIG. 12. At block 1306, a PSI report is generated with the plurality of PSI report elements wherein one or more of the PSI report elements are compressed, e.g., as discussed in stage 9 of FIG. 12. At block 1308, the PSI report is transmitted to a network entity, such as another UE, a serving base station, or a location server, in a lower layer channel container, e.g., as discussed in stage 10 of FIG. 12.

In one implementation, the one or more of the PSI report elements may be compressed using one or more compression configurations to compress the one or more PSI report elements, e.g., as discussed in FIGs. 6 and 7. For example, the one or more compression configurations may include increasing granularity of the information, increasing a minimum value of the information, decreasing a maximum value of the information, applying linear scaling, logarithmic scaling, or a combination thereof, e.g., as discussed in FIGs. 6 and 7. In one example, the UE may receive the one or more compression configurations to compress the one or more PSI report elements from the network entity, e.g., as discussed in stage 1 of FIG. 12. The PSI report may be divided into a plurality of parts, with at least one part having a constant size and remaining parts having a variable size, and the one or more compression configurations to compress the one or more PSI report elements may be reported to the network entity in the at least one part having the constant size, e.g., as discussed in FIG. 5, and stage 9 of FIG. 12. In one implementation, the one or more compression configurations may be separately selected for the information related to each type of positioning measurement. In another implementation, a first compression configuration may be selected for the information related to all timing based positioning measurements, a second compression configuration may be selected for the information related to all angle based positioning measurements, and a third compression configuration may be selected for the information related to all power based positioning measurements, i.e., any energy based measurement such as RSRP, SINR, RSSI, etc. In another implementation, a compression configuration may be separately selected from preconfigured sets of compression configurations having different levels of compression.

In one implementation, the UE may determine that a size of the plurality of PSI report elements with one or more of the PSI report elements compressed is larger than the lower layer channel container, and may omit at least one PSI report element from the PSI report so that remaining PSI report elements fit within the lower layer channel container, e.g., as discussed at FIGs. 8, 9, and stage 8 of FIG. 12.

In one implementation, the UE may order the PSI report elements according to one or more priority rules, wherein compressing the one or more of the PSI report elements comprises compressing a lowest priority PSI report element, e.g., as discussed in FIG. 8. The UE may determine that a size of the plurality of PSI report elements with the lowest priority PSI report element compressed is larger than the lower layer channel container, and may omit the lowest priority PSI report element from the PSI report so that remaining PSI report elements fit within the lower layer channel container, e.g., as discussed at FIGs. 8, 10, and stage 8 of FIG. 12. For example, the UE may iteratively repeat compressing the lowest priority PSI report element of the remaining PSI report elements and omitting the lowest priority PSI report element from the remaining PSI report elements until the remaining PSI report elements fit within the lower layer channel container e.g., as discussed at FIGs. 8, 10, and stage 8 of FIG. 12.

In one implementation, compressing the one or more of the PSI report elements may include compressing all of the PSI report elements.

In one implementation, a level of compression for the information related to each type of positioning measurement may be based on a positioning method performed by the UE.

In one implementation, the at least one PSI report element may include a position fix for the UE and may be compressed, wherein the position fix is reported relative to a reference transmission reception point (TRP) or a serving TRP, e.g., as discussed in FIGs. 11A, 11B, and stage 8 of FIG. 12. For example, the position fix may be in polar coordinates including a distance with one of angles or cosine or sine functions of the angles with respect to the reference TRP or the serving TRP, e.g., as discussed in FIG. 11A. In another example, the position fix may be in cartesian coordinates and may include a difference of each coordinate with respect to a corresponding coordinate of the reference TRP or serving TRP, e.g., as discussed in FIG. 11B. In another example, the position fix may be relative to the reference TRP or serving TRP is compressed by reducing a number of bits used for distance values greater than a maximum value.

In one implementation, the lower layer channel container may be either a physical layer channel container or a Medium Access Control - Control Element (MAC-CE) block. For example, the physical layer channel may be a physical uplink shared channel (PUSCH), a physical uplink control channel (PUCCH), or a physical sidelink shared channel (PSSCH).

In one implementation, the UE may configure a level of compression for the one or more of the PSI report element based on a type of physical layer channel. For example, a first level of compression may be used for the one or more of the PSI report element when the physical layer channel is a physical uplink control channel (PUCCH) and a second level of compression of the one or more of the PSI report element may be used when the physical layer channel comprises a physical uplink shared channel (PUSCH), wherein the first level of compression is higher than the second level of compression.

In one implementation, the UE may configure a level of compression for the one or more of the PSI report element based on a format of the physical layer channel.

In one implementation, the information related to positioning measurements performed by the UE in the PSI report elements may be one or more of: at least one Reference Signal Time Difference (RSTD) vector; at least one UE receive-transmit time difference (Rx-Tx) vector; at least one reference signal receive power (RSRP) vector; at least one quality metric vector; at least one velocity or trajectory vector; a reference Transmission Reception Point (TRP); at least one Time of Arrival (TOA) vector; at least one multipath vector; at least one Line of Sight (LOS) / Non-Line of Sight (NLOS) factor; at least one Signal to Interference Noise Ratio (SINR) vector; at least one time-stamp, wherein a vector is a set of one or more measurements associated with at least one of a same time, a same TRP, same beam, same frequency band, same antenna, or a combination thereof.

FIG. 14 shows a flowchart for an exemplary method 1400 for wireless communications for a UE, such as UE 104, performed by a network entity in a wireless network, such as serving base station in a RAN, e.g., base station 102, or a location server with the RAN, such as location sever 172 or LMF 270, or a UE in sidelink communication with the UE, that receives a PSI report with compressed PSI report elements on a lower layer channel, according to the disclosure herein.

At block 1402, the network entity receives from the UE a positioning state information (PSI) report in a lower layer channel container, the PSI report containing PSI report elements, wherein each PSI report element comprises information related to positioning measurements performed by the UE, wherein one or more of the PSI report elements in the PSI report are compressed, e.g., as discussed at stages 7-10 of FIG. 12. At block 1404, the network entity processes the PSI report to obtain the information related to positioning measurements, e.g., as discussed at stages 11a, 11b, or 11c of FIG. 12.

In one implementation, the one or more of the PSI report elements is compressed using one or more compression configurations, e.g., as discussed in FIGs. 6 and 7. For example, the one or more compression configurations may include increasing granularity of the information, increasing a minimum value of the information, decreasing a maximum value of the information, applying linear scaling, logarithmic scaling, or a combination thereof, e.g., as discussed in FIGs. 6 and 7. In one example, the network entity may transmit the one or more compression configurations to compress the one or more PSI report elements to the UE, e.g., as discussed at stage 1 of FIG. 12. The PSI report may be divided into a plurality of parts, with at least one part having a constant size and remaining parts having a variable size, and the one or more compression configurations to compress the one or more PSI report elements may be received from the UE in the at least one part having the constant size, e.g., as discussed in FIG. 5, and stage 9 of FIG. 12. In one implementation, a compression configuration is separately selected for the information related to each type of positioning measurement. In another implementation, a first compression configuration may be selected for the information related to all timing based positioning measurements, a second compression configuration may be selected for the information related to all angle based positioning measurements, and a third compression configuration may be selected for the information related to all power based positioning measurements, i.e., any energy based measurement such as RSRP, SINR, RSSI, etc. In another implementation, a compression configuration may be selected from preconfigured sets of compression configurations having different levels of compression.

In one implementation, at least one PSI report element is omitted from the PSI report so that remaining PSI report elements fit within the lower layer channel container, e.g., as discussed in FIG. 8.

In one implementation, the plurality of PSI report elements is ordered according to one or more priority rules and at least one low priority PSI report elements is omitted from the PSI report, e.g., as discussed in FIG. 8-10. In one example, a lowest priority PSI report element in the PSI report is compressed and remaining PSI report elements are not compressed, e.g., as discussed in FIGs 8-10.

In one implementation, all of the PSI report elements are compressed.

In one implementation, a level of compression for the information related to each type of positioning measurement may be based on a positioning method performed by the UE.

In one implementation, the at least one PSI report element may include a position fix for the UE and is compressed, wherein the position fix is reported relative to a reference transmission reception point (TRP) or a serving TRP, e.g., as discussed in FIGs. 11A, 11B, and stage 8 of FIG. 12. For example, the position fix is in polar coordinates including a distance with one of angles or cosine or sine functions of the angles with respect to the reference TRP or the serving TRP, e.g., as discussed in FIG. 11A. In another example, the position fix is in cartesian coordinates and includes a difference of each coordinate with respect to a corresponding coordinate of the reference TRP or serving TRP, e.g., as discussed in FIG. 11B. In another example, the position fix relative to the reference TRP or serving TRP is compressed by reducing a number of bits for distance values greater than a maximum value.

In one implementation, the lower layer channel container may be either a physical layer channel container or a Medium Access Control - Control Element (MAC-CE) block. For example, the physical layer channel may be a physical uplink shared channel (PUSCH), a physical uplink control channel (PUCCH), or a physical sidelink shared channel (PSSCH).

In one implementation, the network entity may configure a level of compression for the one or more of the PSI report element based on a type of physical layer channel. For example, a first level of compression may be used for the one or more of the PSI report element when the physical layer channel is a physical uplink control channel (PUCCH) and a second level of compression of the one or more of the PSI report element may be used when the physical layer channel comprises a physical uplink shared channel (PUSCH), wherein the first level of compression is higher than the second level of compression.

In one implementation, the network entity may configure a level of compression for the one or more of the PSI report element based on a format of the physical layer channel.

In one implementation, the information related to positioning measurements performed by the UE in the PSI report elements may be one or more of: at least one Reference Signal Time Difference (RSTD) vector; at least one UE receive-transmit time difference (Rx-Tx) vector; at least one reference signal receive power (RSRP) vector; at least one quality metric vector; at least one velocity or trajectory vector; a reference Transmission Reception Point (TRP); at least one Time of Arrival (TOA) vector; at least one multipath vector; at least one Line of Sight (LOS) / Non-Line of Sight (NLOS) factor; at least one Signal to Interference Noise Ratio (SINR) vector; at least one time-stamp, wherein a vector is a set of one or more measurements associated with at least one of a same time, a same TRP, same beam, same frequency band, same antenna, or a combination thereof.

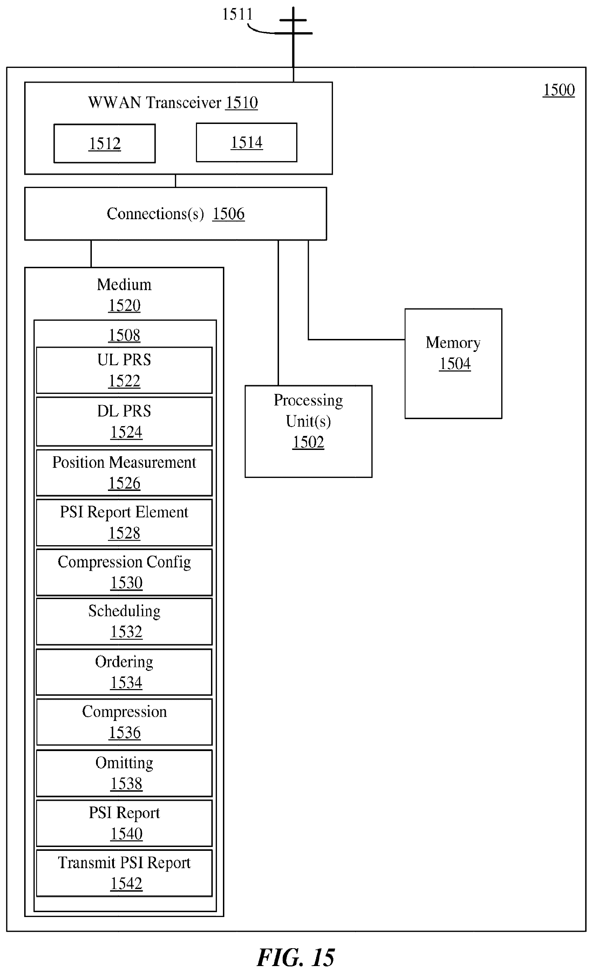

**FIG. 15** shows a schematic block diagram illustrating certain exemplary features of a UE 1500, e.g., which may be UE 104 shown in FIG. 1, enabled to reduce overhead in a PSI report that is transmitted on a lower layer channel by compressing PSI report elements, according to the disclosure herein. UE 1500 may, for example, include one or more processors 1502, memory 1504, an external interface such as a wireless transceiver 1510 (e.g., wireless network interface), which may be operatively coupled with one or more connections 1506 (e.g., buses, lines, fibers, links, etc.) to non-transitory computer readable medium 1520 and memory 1504.

The UE 1500 may further include additional items, which are not shown, such as a user interface that may include e.g., a display, a keypad or other input device, such as virtual keypad on the display, through which a user may interface with the UE, or a satellite positioning system receiver. In certain example implementations, all or part of UE 1500 may take the form of a chipset, and/or the like. Wireless transceiver 1510 may, for example, include a transmitter 1512 enabled to transmit one or more signals over one or more types of wireless communication networks and a receiver 1514 to receive one or more signals transmitted over the one or more types of wireless communication networks.

In some embodiments, UE 1500 may include antenna 1511, which may be internal or external. UE antenna 1511 may be used to transmit and/or receive signals processed by wireless transceiver 1510. In some embodiments, UE antenna 1511 may be coupled to wireless transceiver 1510. In some embodiments, measurements of signals received (transmitted) by UE 1500 may be performed at the point of connection of the UE antenna 1511 and wireless transceiver 1510. For example, the measurement point of reference for received (transmitted) RF signal measurements may be an input (output) terminal of the receiver 1514 (transmitter 1512) and an output (input) terminal of the UE antenna 1511. In a UE 1500 with multiple UE antennas 1511 or antenna arrays, the antenna connector may be viewed as a virtual point representing the aggregate output (input) of multiple UE antennas. UE 1500 may receive signals, e.g., DL PRS, and/or transmit UL PRS or SRS for positioning. Measurements of signals, including one or more of timing measurements, such RSTD, UE Rx-Tx, TOA, etc., angle measurements, such as RSRP, power or energy measurements, such as RSRP, quality metrics, velocity and/or trajectory measurements, reference TRP, multipath information, line of sight (LOS) or non-line of sight (NLOS) factors, signal to interference noise ratio (SINR), and time stamps may be processed by the one or more processors 1502.

The one or more processors 1502 may be implemented using a combination of hardware, firmware, and software. For example, the one or more processors 1502 may be configured to perform the functions discussed herein by implementing one or more instructions or program code 1508 on a non-transitory computer readable medium, such as medium 1520 and/or memory 1504. In some embodiments, the one or more processors 1502 may represent one or more circuits configurable to perform at least a portion of a data signal computing procedure or process related to the operation of UE 1500.

The medium 1520 and/or memory 1504 may store instructions or program code 1508 that contain executable code or software instructions that when executed by the one or more processors 1502 cause the one or more processors 1502 to operate as a special purpose computer programmed to perform the techniques disclosed herein. As illustrated in UE 1500, the medium 1520 and/or memory 1504 may include one or more components or modules that may be implemented by the one or more processors 1502 to perform the methodologies described herein. While the components or modules are illustrated as software in medium 1520 that is executable by the one or more processors 1502, it should be understood that the components or modules may be stored in memory 1504 or may be dedicated hardware either in the one or more processors 1502 or off the processors.

A number of software modules and data tables may reside in the medium 1520 and/or memory 1504 and be utilized by the one or more processors 1502 in order to manage both communications and the functionality described herein. It should be appreciated that the organization of the contents of the medium 1520 and/or memory 1504 as shown in UE 1500 is merely exemplary, and as such the functionality of the modules and/or data structures may be combined, separated, and/or be structured in different ways depending upon the implementation of the UE 1500.

The medium 1520 and/or memory 1504 may include a UL PRS transmit module 1522 that when implemented by the one or more processors 1502 configures the one or more processors 1502 to transmit, via the wireless transceiver 1510, UL PRS or SRS for positioning.

The medium 1520 and/or memory 1504 may include a DL PRS module 1524 that when implemented by the one or more processors 1502 configures the one or more processors 1502 to receive, via the wireless transceiver 1510, DL PRS transmitted by one or more base stations.

The medium 1520 and/or memory 1504 may include a position measurement module 1526 that when implemented by the one or more processors 1502 configures the one or more processors 1502 to perform positioning measurements using received DL PRS and/or UL PRS. For example, the one or more processors 1502 may be configured to perform DL positioning measurements for one or more positioning methods based on received DL PRS, UL positioning measurements for one or more positioning methods based on transmitted UL PRS, or DL and UL positioning measurements for one or more positioning methods based on the received DL PRS and the transmitted UL PRS. Multiple positioning measurements may be performed, e.g., the same type of positioning measurements may be performed at different times and/or different types of positioning measurements may be performed at the same time or at different times. The positioning measurements may be for one or more positioning methods, such as TDOA, AoD, multi-RTT, hybrid positioning methods, etc. By way of example, the one or more processors 1502 may be configured for positioning measurements including one or more of, timing measurements such as RSTD, UE Rx-Tx, TOA, etc., energy measurements such as RSRP, quality metrics, velocity and/or trajectory measurements, reference TRP, multipath information, LOS/NLOS factors, SINR, and time stamps. In some implementations, the one or more processors 1502 may be further configured to estimate a position of the UE 1500 in a UE based positioning process using the position measurements and the locations of base stations, e.g., received in assistance data.

The medium 1520 and/or memory 1504 may include a PSI report element module 1528 that when implemented by the one or more processors 1502 configures the one or more processors 1502 to determine a plurality of PSI report elements based on information related to the positioning measurements. By way of example, the information related to positioning measurements used to determine the PSI report elements may include one or more of: at least one RSTD vector; at least one UE Rx-Tx vector; at least one RSRP vector; at least one quality metric vector; at least one velocity vector; a reference TRP; at least one TOA vector; at least one multipath vector; at least one LOS/ NLOS factor; at least one SINR vector; at least one time-stamp.

The medium 1520 and/or memory 1504 may include a compression configuration module 1530 that when implemented by the one or more processors 1502 configures the one or more processors 1502 to determine a compression configuration, including the type of compression and amount or level of compression to be used with information from different types or classes of positioning measurements. The compression configuration, for example, may be received from a network entity, such as a serving base station, location server, or a sidelink UE, via the wireless transceiver 1510, or may be determined by the UE 1500.

The medium 1520 and/or memory 1504 may include a scheduling module 1532 that when implemented by the one or more processors 1502 configures the one or more processors 1502 to determine a schedule for a lower layer channel container in which the PSI report is to be transmitted by the UE 1500, e.g., by receiving the grant from a serving base station, via the wireless transmitter.

The medium 1520 and/or memory 1504 may include an ordering module 1534 that when implemented by the one or more processors 1502 configures the one or more processors 1502 to order the PSI report elements, e.g., according to a predetermined priority. For example, the order of the PSI report elements may be based on priorities giving to the different types or classes of positioning measurement information.

The medium 1520 and/or memory 1504 may include a compression module 1536 that when implemented by the one or more processors 1502 configures the one or more processors 1502 to compress one or more of the PSI report elements based on the compression configuration. For example, the one or more PSI report elements may be compressed by increasing granularity of the information, increasing a minimum value of the information, decreasing a maximum value of the information, applying linear scaling, logarithmic scaling, or a combination thereof. Different types or levels of compression may be used for different types or classes of positioning measurements. In another implementation, a compression configuration may be separately selected from preconfigured sets of compression configurations having different levels of compression. In some implementations, the compression configuration may be static and stored in medium 1520 and/or memory 1504

The medium 1520 and/or memory 1504 may include an omitting module 1538 that when implemented by the one or more processors 1502 configures the one or more processors 1502 to omit one or more of the PSI report elements from the PSI report, e.g., if all the PSI report elements (one or more of which may be compressed) do not fit with the channel container scheduled for the PSI report. In some implementation, the one or more processors 1502 with the compression module 1536 and the omitting module 1538 to operate iteratively to compress and omit PSI report elements until the remaining PSI report elements fit within the scheduled channel container.

The medium 1520 and/or memory 1504 may include a PSI report module 1540 that when implemented by the one or more processors 1502 configures the one or more processors 1502 to generate a PSI report based on the compressed and omitted PSI report elements. The PSI report may be divided into a plurality of parts, where at least one part may have a constant size and the remaining parts may have a variable size, and the remaining PSI report elements, some or all of which may be compressed, are placed in the part of the PSI report with the variable size. The one or more processors 1502 may be configured to include an indication, in a first part with fixed size, if a PSI report element is compressed or if PSI report elements are omitted. Additionally, in instances where the UE determines the compression configuration, the one or more processors 1502 may be configured to include in the PSI report the compression configuration, such as the type of compression and level of compression used, e.g., in the first part of the PSI report with fixed size.

The medium 1520 and/or memory 1504 may include a transmit PSI report module 1542 that when implemented by the one or more processors 1502 configures the one or more processors 1502 to transmit the PSI report in an SL or UL lower layer channel container to a network entity, such as another UE, the serving base station, or location server, via the wireless transceiver 1510. For example, the UE 104 may transmit the PSI report using a PHY layer, e.g., using PUSCH, PUCCH, PSSCH, or on a MAC layer, using a MAC-CE block.

The methodologies described herein may be implemented by various means depending upon the application. For example, these methodologies may be implemented in hardware, firmware, software, or any combination thereof. For a hardware implementation, the one or more processors 1502 may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic devices, other electronic units designed to perform the functions described herein, or a combination thereof.

For a firmware and/or software implementation, the methodologies may be implemented with modules (e.g., procedures, functions, and so on) that perform the functions described herein. Any machine readable medium tangibly embodying instructions may be used in implementing the methodologies described herein. For example, software codes may be stored in a non-transitory computer readable medium 1520 or memory 1504 that is connected to and executed by the one or more processors 1502. Memory may be implemented within the one or more processors or external to the one or more processors. As used herein the term "memory" refers to any type of long term, short term, volatile, nonvolatile, or other memory and is not to be limited to any particular type of memory or number of memories, or type of media upon which memory is stored.

If implemented in firmware and/or software, the functions may be stored as one or more instructions or program code 1508 on a non-transitory computer readable medium, such as medium 1520 and/or memory 1504. Examples include computer readable media encoded with a data structure and computer readable media encoded with a computer program 1508. For example, the non-transitory computer readable medium including program code 1508 stored thereon may include program code 1508 to support reducing overhead in a PSI report that is transmitted on a lower layer channel by compressing PSI report elements, in a manner consistent with disclosed embodiments. Non-transitory computer readable medium 1520 includes physical computer storage media. A storage medium may be any available medium that can be accessed by a computer. By way of example, and not limitation, such non-transitory computer readable media can comprise RAM, ROM, EEPROM, CD-ROM or other optical disk storage, magnetic disk storage or other magnetic storage devices, or any other medium that can be used to store desired program code 1508 in the form of instructions or data structures and that can be accessed by a computer; disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer readable media.

In addition to storage on computer readable medium 1520, instructions and/or data may be provided as signals on transmission media included in a communication apparatus. For example, a communication apparatus may include a wireless transceiver 1510 having signals indicative of instructions and data. The instructions and data are configured to cause one or more processors to implement the functions outlined in the claims. That is, the communication apparatus includes transmission media with signals indicative of information to perform disclosed functions.

Memory 1504 may represent any data storage mechanism. Memory 1504 may include, for example, a primary memory and/or a secondary memory. Primary memory may include, for example, a random access memory, read only memory, etc. While illustrated in this example as being separate from one or more processors 1502, it should be understood that all or part of a primary memory may be provided within or otherwise co-located/coupled with the one or more processors 1502. Secondary memory may include, for example, the same or similar type of memory as primary memory and/or one or more data storage devices or systems, such as, for example, a disk drive, an optical disc drive, a tape drive, a solid state memory drive, etc.

In certain implementations, secondary memory may be operatively receptive of, or otherwise configurable to couple to a non-transitory computer readable medium 1520. As such, in certain example implementations, the methods and/or apparatuses presented herein may take the form in whole or part of a computer readable medium 1520 that may include computer implementable code 1508 stored thereon, which if executed by one or more processors 1502 may be operatively enabled to perform all or portions of the example operations as described herein. Computer readable medium 1520 may be a part of memory 1504.

In one implementation, a UE, such as UE 1500, may be configured for wireless communications and may include a means for determining a plurality of positioning state information (PSI) report elements, wherein each PSI report element comprises information related to positioning measurements performed by the UE, which may be, e.g., the wireless transceiver 1510 and one or more processors 1502 with dedicated hardware or implementing executable code or software instructions in memory 1504 and/or medium 1520 such as the position measurement module 1526 and the PSI report element module 1528. A means for compressing one or more of the PSI report elements; may be, e.g., the one or more processors 1502 with dedicated hardware or implementing executable code or software instructions in memory 1504 and/or medium 1520 such as the compression module 1536. A means for generating a PSI report with the plurality of PSI report elements wherein one or more of the PSI report elements are compressed may be, e.g., the one or more processors 1502 with dedicated hardware or implementing executable code or software instructions in memory 1504 and/or medium 1520 such as the PSI report module 1540. A means for transmitting the PSI report to a network entity in a lower layer channel container may be, e.g., the wireless transceiver 1510 and one or more processors 1502 with dedicated hardware or implementing executable code or software instructions in memory 1504 and/or medium 1520 such as the transmit PSI report module 1542.

In one implementation, the means for compressing the one or more of the PSI report elements may include a means for using one or more compression configurations to compress the one or more PSI report elements, which may be, e.g., the one or more processors 1502 with dedicated hardware or implementing executable code or software instructions in memory 1504 and/or medium 1520 such as the compression configuration module 1530 and the compression module 1536. For example, the UE may further include a means for receiving the one or more compression configurations to compress the one or more PSI report elements from the network entity, which may be, e.g., the wireless transceiver 1510 and one or more processors 1502 with dedicated hardware or implementing executable code or software instructions in memory 1504 and/or medium 1520 such as the compression configuration module 1530 and the compression module 1536. In one example, the UE may include a means for separately selecting a compression configuration for the information related to each type of positioning measurement, which may be, e.g., the one or more processors 1502 with dedicated hardware or implementing executable code or software instructions in memory 1504 and/or medium 1520 such as the compression configuration module 1530 and the compression module 1536. In one example, the UE may include a means for selecting a first compression configuration for the information related to all timing based positioning measurements, a second compression configuration for the information related to all angle based positioning measurements, and a third compression configuration for the information related to all power based positioning measurements, which may be, e.g., the one or more processors 1502 with dedicated hardware or implementing executable code or software instructions in memory 1504 and/or medium 1520 such as the compression configuration module 1530 and the compression module 1536. In one example, the UE may include a means for separately selecting a compression configuration from preconfigured sets of compression configurations having different levels of compression, which may be, e.g., the one or more processors 1502 with dedicated hardware or implementing executable code or software instructions in memory 1504 and/or medium 1520 such as the compression configuration module 1530 and the compression module 1536.

In one implementation, the UE may include a means for determining that a size of the plurality of PSI report elements with one or more of the PSI report elements compressed is larger than the lower layer channel container, which may be, e.g., the one or more processors 1502 with dedicated hardware or implementing executable code or software instructions in memory 1504 and/or medium 1520 such as the scheduling module 1532 and omitting module 1538, and a means for omitting at least one PSI report element from the PSI report so that remaining PSI report elements fit within the lower layer channel container, which may be, e.g., the one or more processors 1502 with dedicated hardware or implementing executable code or software instructions in memory 1504 and/or medium 1520 such as the omitting module 1538.

In one implementation, the UE may include a means for ordering the PSI report elements according to one or more priority rules, which may be, e.g., the one or more processors 1502 with dedicated hardware or implementing executable code or software instructions in memory 1504 and/or medium 1520 such as the ordering module 1534. The means for compressing the one or more of the PSI report elements may compress a lowest priority PSI report element. A means for determining that a size of the plurality of PSI report elements with the lowest priority PSI report element compressed is larger than the lower layer channel container, may be, e.g., the one or more processors 1502 with dedicated hardware or implementing executable code or software instructions in memory 1504 and/or medium 1520 such as the scheduling module 1532 and the omitting module 1538. A means for omitting the lowest priority PSI report element from the PSI report so that remaining PSI report elements fit within the lower layer channel container may be, e.g., the wireless transceiver 1510 and one or more processors 1502 with dedicated hardware or implementing executable code or software instructions in memory 1504 and/or medium 1520 such as the omitting module 1538. A means for iteratively repeating compressing the lowest priority PSI report element of the remaining PSI report elements and omitting the lowest priority PSI report element from the remaining PSI report elements until the remaining PSI report elements fit within the lower layer channel container, may be, e.g., the one or more processors 1502 with dedicated hardware or implementing executable code or software instructions in memory 1504 and/or medium 1520 such as the compression module 1536 and the omitting module 1538.

In one implementation, the UE may further include a means for configuring a level of compression for the one or more of the PSI report element based on a type of physical layer channel, which may be, e.g., the one or more processors 1502 with dedicated hardware or implementing executable code or software instructions in memory 1504 and/or medium 1520 such as the compression module 1536. For example, a first level of compression may be used for the one or more of the PSI report element when the physical layer channel is a physical uplink control channel (PUCCH) and a second level of compression of the one or more of the PSI report element may be used when the physical layer channel comprises a physical uplink shared channel (PUSCH), wherein the first level of compression is higher than the second level of compression.

In one implementation, the UE may further include a means for configuring a level of compression for the one or more of the PSI report element based on a format of the physical layer channel, which may be, e.g., the one or more processors 1502 with dedicated hardware or implementing executable code or software instructions in memory 1504 and/or medium 1520 such as the compression module 1536.

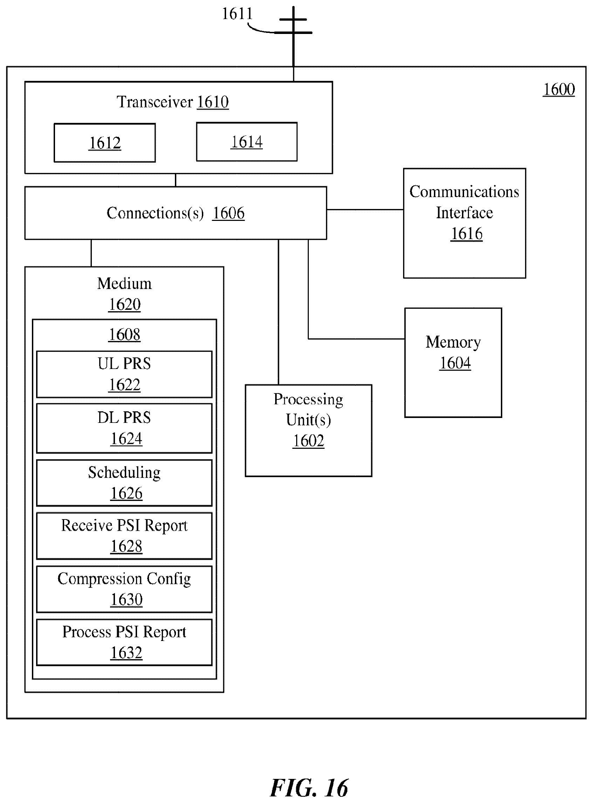

FIG. 16 shows a schematic block diagram illustrating certain exemplary features of a network entity 1600 in a wireless network enabled to support wireless communications with a UE, e.g., UE 104, to reduce overhead in a PSI report that is transmitted on a lower layer channel by compressing PSI report elements, according to the disclosure herein. The network entity 1600, for example, may be a serving base station 102 or location server 172 or LMF 270 in FIGs. 1 and 2B, or another UE in SL communication with UE. The network entity 1600 may, for example, include one or more processors 1602, memory 1604, and an external interface, which may include a wireless transceiver 1610 (e.g., wireless network interface), e.g., if the network entity 1600 is a serving base station or sidelink UE, and/or a communications interface 1616 (e.g., wireline or wireless network interface to other network entities and/or the core network), which may be operatively coupled with one or more connections 1606 (e.g., buses, lines, fibers, links, etc.) to non-transitory computer readable medium 1620 and memory 1604. In some implementations, the network entity 1600 may further include additional items, which are not shown, such as a user interface that may include e.g., a display, a keypad or other input device, such as virtual keypad on the display, through which a user may interface with the network entity, e.g., if the network entity is a sidelink UE. In certain example implementations, all or part of network entity 1600 may take the form of a chipset, and/or the like. Wireless transceiver 1610, if present, may, for example, include a transmitter 1612 enabled to transmit one or more signals over one or more types of wireless communication networks and a receiver 1614 to receive one or more signals transmitted over the one or more types of wireless communication networks. The communications interface 1616 may be a wired or wireless interface capable of connecting to other base stations, e.g., in the RAN or network entities, such as a location server 172 shown in FIG. 1.

In some embodiments, network entity 1600 may include antenna 1611, which may be internal or external. Antenna 1611 may be used to transmit and/or receive signals processed by wireless transceiver 1610. In some embodiments, antenna 1611 may be coupled to wireless transceiver 1610. In some embodiments, measurements of signals received (transmitted) by network entity 1600 may be performed at the point of connection of the antenna 1611 and wireless transceiver 1610. For example, the measurement point of reference for received (transmitted) RF signal measurements may be an input (output) terminal of the receiver 1614 (transmitter 1612) and an output (input) terminal of the antenna 1611. In a network entity 1600 with multiple antennas 1611 or antenna arrays, the antenna connector may be viewed as a virtual point representing the aggregate output (input) of multiple antennas. In some embodiments, network entity 1600 may measure received signals, (e.g., UL PRS or SRS for positioning) including signal strength and TOA measurements and the raw measurements may be processed by the one or more processors 1602.

The one or more processors 1602 may be implemented using a combination of hardware, firmware, and software. For example, the one or more processors 1602 may be configured to perform the functions discussed herein by implementing one or more instructions or program code 1608 on a non-transitory computer readable medium, such as medium 1620 and/or memory 1604. In some embodiments, the one or more processors 1602 may represent one or more circuits configurable to perform at least a portion of a data signal computing procedure or process related to the operation of network entity 1600.

The medium 1620 and/or memory 1604 may store instructions or program code 1608 that contain executable code or software instructions that when executed by the one or more processors 1602 cause the one or more processors 1602 to operate as a special purpose computer programmed to perform the techniques disclosed herein. As illustrated in network entity 1600, the medium 1620 and/or memory 1604 may include one or more components or modules that may be implemented by the one or more processors 1602 to perform the methodologies described herein. While the components or modules are illustrated as software in medium 1620 that is executable by the one or more processors 1602, it should be understood that the components or modules may be stored in memory 1604 or may be dedicated hardware either in the one or more processors 1602 or off the processors.

A number of software modules and data tables may reside in the medium 1620 and/or memory 1604 and be utilized by the one or more processors 1602 in order to manage both communications and the functionality described herein. It should be appreciated that the organization of the contents of the medium 1620 and/or memory 1604 as shown in network entity 1600 is merely exemplary, and as such the functionality of the modules and/or data structures may be combined, separated, and/or be structured in different ways depending upon the implementation of the network entity 1600.

The medium 1620 and/or memory 1604 may include a UL PRS transmit module 1622, e.g., if the network entity 1600 is a serving base station, that when implemented by the one or more processors 1602 configures the one or more processors 1602 to receive, via the wireless transceiver 1610, UL PRS or SRS for positioning, from the UE 164.

The medium 1620 and/or memory 1604 may include a DL PRS module 1624, e.g., if the network entity 1600 is a serving base station, that when implemented by the one or more processors 1602 configures the one or more processors 1602 to transmit, via the wireless transceiver 1610, DL PRS to the UE 164.

The medium 1620 and/or memory 1604 may include a scheduling module 1626, e.g., if the network entity 1600 is a serving base station, that when implemented by the one or more processors 1602 configures the one or more processors 1602 to schedule for a lower layer channel container in which the PSI report is to be transmitted by the UE 104, and transmit the schedule or grant to the UE 104, via the wireless transmitter.

The medium 1620 and/or memory 1604 may include a receive PSI report module 1628 that when implemented by the one or more processors 1602 configures the one or more processors 1602 to receive the PSI report in a lower layer channel container from the UE 104, e.g., via the wireless transceiver 1610 if the network entity 1600 is a sidelink UE or a serving base station, or a communications interface 1616 if the network entity 1600 is a location server. The lower layer channel container, for example, may be a SL channel if the network entity 1600 is another UE, or an UL channel if the network entity 1600 is a serving base station or location server. For example, the PSI report may be received on a PHY layer, e.g., using PUSCH, PUCCH, PSSCH, or on a MAC layer, using a MAC-CE. The PSI report may include information related to positioning measurements performed by the UE 104, wherein one or more of the PSI report elements in the PSI report may be compressed based on the compression configuration. For example, the one or more PSI report elements may be compressed by increasing granularity of the information, increasing a minimum value of the information, decreasing a maximum value of the information, applying linear scaling, logarithmic scaling, or a combination thereof. Different types or levels of compression may be used for different types or classes of positioning measurements. In another implementation, a compression configuration may be separately selected from preconfigured sets of compression configurations having different levels of compression. Additionally, one or more of the PSI report elements may have been omitted from the PSI report. The PSI report may be divided into a plurality of parts, where at least one part may have a constant size and the remaining parts may have a variable size, and the remaining PSI report elements, some or all of which may be compressed, are placed in the part of the PSI report with the variable size. The first part with fixed size may indicate if a PSI report element is compressed or if PSI report elements are omitted. Additionally, in instances where the UE determines the compression configuration, the compression configuration, such as the type of compression and level of compression used, may be included in the first part of the PSI report with fixed size.

The medium 1620 and/or memory 1604 may include a compression configuration module 1630 that when implemented by the one or more processors 1602 configures the one or more processors 1602 to determine the compression configuration to be used by the UE to order the PSI report elements. The compression configuration, for example, may be transmitted to the UE, e.g., via wireless transceiver 1610 or communications interface 1616. If the UE 104 generates the compression configuration, the one or more processors 1602 may be configured to receive the compression configuration from the UE, e.g., in the PSI report. In some implementations, the compression configuration may be static and stored in medium 1620 and/or memory 1604.

The medium 1620 and/or memory 1604 may include a process PSI report module 1632 that when implemented by the one or more processors 1602 configures the one or more processors 1602 to process the PSI report, e.g., using the compression configuration to determine the PSI report elements.

The methodologies described herein may be implemented by various means depending upon the application. For example, these methodologies may be implemented in hardware, firmware, software, or any combination thereof. For a hardware implementation, the one or more processors 1602 may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic devices, other electronic units designed to perform the functions described herein, or a combination thereof.

For a firmware and/or software implementation, the methodologies may be implemented with modules (e.g., procedures, functions, and so on) that perform the functions described herein. Any machine readable medium tangibly embodying instructions may be used in implementing the methodologies described herein. For example, software codes may be stored in a non-transitory computer readable medium 1620 or memory 1604 that is connected to and executed by the one or more processors 1602. Memory may be implemented within the one or more processors or external to the one or more processors. As used herein the term "memory" refers to any type of long term, short term, volatile, nonvolatile, or other memory and is not to be limited to any particular type of memory or number of memories, or type of media upon which memory is stored.

If implemented in firmware and/or software, the functions may be stored as one or more instructions or program code 1608 on a non-transitory computer readable medium, such as medium 1620 and/or memory 1604. Examples include computer readable media encoded with a data structure and computer readable media encoded with a computer program 1608. For example, the non-transitory computer readable medium including program code 1608 stored thereon may include program code 1608 to support a UE to compress PSI report elements in a PSI report that is transmitted on a lower layer channel, in a manner consistent with disclosed embodiments. Non-transitory computer readable medium 1620 includes physical computer storage media. A storage medium may be any available medium that can be accessed by a computer. By way of example, and not limitation, such non-transitory computer readable media can comprise RAM, ROM, EEPROM, CD-ROM or other optical disk storage, magnetic disk storage or other magnetic storage devices, or any other medium that can be used to store desired program code 1608 in the form of instructions or data structures and that can be accessed by a computer; disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer readable media.

In addition to storage on computer readable medium 1620, instructions and/or data may be provided as signals on transmission media included in a communication apparatus. For example, a communication apparatus may include a wireless transceiver 1610 having signals indicative of instructions and data. The instructions and data are configured to cause one or more processors to implement the functions outlined in the claims. That is, the communication apparatus includes transmission media with signals indicative of information to perform disclosed functions.

Memory 1604 may represent any data storage mechanism. Memory 1604 may include, for example, a primary memory and/or a secondary memory. Primary memory may include, for example, a random access memory, read only memory, etc. While illustrated in this example as being separate from one or more processors 1602, it should be understood that all or part of a primary memory may be provided within or otherwise co-located/coupled with the one or more processors 1602. Secondary memory may include, for example, the same or similar type of memory as primary memory and/or one or more data storage devices or systems, such as, for example, a disk drive, an optical disc drive, a tape drive, a solid state memory drive, etc.

In certain implementations, secondary memory may be operatively receptive of, or otherwise configurable to couple to a non-transitory computer readable medium 1620. As such, in certain example implementations, the methods and/or apparatuses presented herein may take the form in whole or part of a computer readable medium 1620 that may include computer implementable code 1608 stored thereon, which if executed by one or more processors 1602 may be operatively enabled to perform all or portions of the example operations as described herein. Computer readable medium 1620 may be a part of memory 1604.

In one implementation, a network entity, such as network entity 1600, may be configured to support wireless communications from a user equipment (UE), and may include a means for receiving from the UE a positioning state information (PSI) report in a lower layer channel container, the PSI report containing PSI report elements, wherein each PSI report element comprises information related to positioning measurements performed by the UE, wherein one or more of the PSI report elements in the PSI report are compressed, which may be, e.g., the external interface including transceiver 1610 and communications interface 1616, one or more processors 1602 with dedicated hardware or implementing executable code or software instructions in memory 1604 and/or medium 1620 such as the receive PSI report module 1628. A means for processing the PSI report to obtain the information related to positioning measurements may be, e.g., the one or more processors 1602 with dedicated hardware or implementing executable code or software instructions in memory 1604 and/or medium 1620 such as the process PSI report module 1632.

In one implementation, the network entity may include a means for transmitting the one or more compression configurations to compress the one or more PSI report elements to the UE may be, e.g., the one or more processors 1602 with dedicated hardware or implementing executable code or software instructions in memory 1604 and/or medium 1620 such as the compression configuration module 1630.

In one implementation, the network entity may include a means for configuring a level of compression for the one or more of the PSI report element based on a type of physical layer channel, which may be, e.g., the one or more processors 1602 with dedicated hardware or implementing executable code or software instructions in memory 1604 and/or medium 1620 such as the compression configuration module 1630. For example, a first level of compression may be used for the one or more of the PSI report element when the physical layer channel is a physical uplink control channel (PUCCH) and a second level of compression of the one or more of the PSI report element may be used when the physical layer channel comprises a physical uplink shared channel (PUSCH), wherein the first level of compression is higher than the second level of compression.

In one implementation, the network entity may include a means for configuring a level of compression for the one or more of the PSI report element based on a format of the physical layer channel, which may be, e.g., the one or more processors 1602 with dedicated hardware or implementing executable code or software instructions in memory 1604 and/or medium 1620 such as the compression configuration module 1630.

Reference throughout this specification to "one example", "an example", "certain examples", or "exemplary implementation" means that a particular feature, structure, or characteristic described in connection with the feature and/or example may be included in at least one feature and/or example of claimed subject matter. Thus, the appearances of the phrase "in one example", "an example", "in certain examples" or "in certain implementations" or other like phrases in various places throughout this specification are not necessarily all referring to the same feature, example, and/or limitation. Furthermore, the particular features, structures, or characteristics may be combined in one or more examples and/or features.

Some portions of the detailed description included herein are presented in terms of algorithms or symbolic representations of operations on binary digital signals stored within a memory of a specific apparatus or special purpose computing device or platform. In the context of this particular specification, the term specific apparatus or the like includes a general purpose computer once it is programmed to perform particular operations pursuant to instructions from program software. Algorithmic descriptions or symbolic representations are examples of techniques used by those of ordinary skill in the signal processing or related arts to convey the substance of their work to others skilled in the art. An algorithm is here, and generally, is considered to be a self-consistent sequence of operations or similar signal processing leading to a desired result. In this context, operations or processing involve physical manipulation of physical quantities. Typically, although not necessarily, such quantities may take the form of electrical or magnetic signals capable of being stored, transferred, combined, compared or otherwise manipulated. It has proven convenient at times, principally for reasons of common usage, to refer to such signals as bits, data, values, elements, symbols, characters, terms, numbers, numerals, or the like. It should be understood, however, that all of these or similar terms are to be associated with appropriate physical quantities and are merely convenient labels. Unless specifically stated otherwise, as apparent from the discussion herein, it is appreciated that throughout this specification discussions utilizing terms such as "processing," "computing," "calculating," "determining" or the like refer to actions or processes of a specific apparatus, such as a special purpose computer, special purpose computing apparatus or a similar special purpose electronic computing device. In the context of this specification, therefore, a special purpose computer or a similar special purpose electronic computing device is capable of manipulating or transforming signals, typically represented as physical electronic or magnetic quantities within memories, registers, or other information storage devices, transmission devices, or display devices of the special purpose computer or similar special purpose electronic computing device.

In the preceding detailed description, numerous specific details have been set forth to provide a thorough understanding of claimed subject matter. However, it will be understood by those skilled in the art that claimed subject matter may be practiced without these specific details. In other instances, methods and apparatuses that would be known by one of ordinary skill have not been described in detail so as not to obscure claimed subject matter.

The terms, "and", "or", and "and/or" as used herein may include a variety of meanings that also are expected to depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein may be used to describe any feature, structure, or characteristic in the singular or may be used to describe a plurality or some other combination of features, structures or characteristics. Though, it should be noted that this is merely an illustrative example and claimed subject matter is not limited to this example.

While there has been illustrated and described what are presently considered to be example features, it will be understood by those skilled in the art that various other modifications may be made, and equivalents may be substituted, without departing from claimed subject matter. Additionally, many modifications may be made to adapt a particular situation to the teachings of claimed subject matter without departing from the central concept described herein.

Implementation examples are described in the following numbered clauses:

1. A method for a user equipment (UE) wireless communications performed by the UE, comprising:

determining a plurality of positioning state information (PSI) report elements, wherein each PSI report element comprises information related to positioning measurements performed by the UE;

compressing one or more of the PSI report elements;

generating a PSI report with the plurality of PSI report elements wherein one or more of the PSI report elements are compressed; and

transmitting the PSI report to a network entity in a lower layer channel container.

2. The method of clause 1, wherein compressing the one or more of the PSI report elements comprises using one or more compression configurations to compress the one or more PSI report elements.

3. The method of clause 2, wherein the one or more compression configurations comprises increasing granularity of the information, increasing a minimum value of the information, decreasing a maximum value of the information, applying linear scaling, logarithmic scaling, or a combination thereof.

4. The method of any of clauses 2-3, further comprising:

receiving the one or more compression configurations to compress the one or more PSI report elements from the network entity.

5. The method of any of clauses 2-4, wherein the PSI report is divided into a plurality of parts, with at least one part having a constant size and remaining parts having a variable size, and wherein the one or more compression configurations to compress the one or more PSI report elements is reported to the network entity in the at least one part having the constant size.

6. The method of any of clauses 2-5, further comprising separately selecting a compression configuration for the information related to each type of positioning measurement.

7. The method of any of clauses 2-6, further comprising selecting a first compression configuration for the information related to all timing based positioning measurements, a second compression configuration for the information related to all angle based positioning measurements, and a third compression configuration for the information related to all power based positioning measurements.

8. The method of any of clauses 2-3 and clauses 5-7, further comprising separately selecting a compression configuration from preconfigured sets of compression configurations having different levels of compression.

9. The method of any of clauses 1-8, further comprising:

determining that a size of the plurality of PSI report elements with one or more of the PSI report elements compressed is larger than the lower layer channel container; and

omitting at least one PSI report element from the PSI report so that remaining PSI report elements fit within the lower layer channel container.

10. The method of any of clauses 1-9, further comprising:

ordering the PSI report elements according to one or more priority rules;

wherein compressing the one or more of the PSI report elements comprises compressing a lowest priority PSI report element;

determining that a size of the plurality of PSI report elements with the lowest priority PSI report element compressed is larger than the lower layer channel container; and

omitting the lowest priority PSI report element from the PSI report so that remaining PSI report elements fit within the lower layer channel container.

11. The method of clause 10, further comprising: iteratively repeating compressing the lowest priority PSI report element of the remaining PSI report elements and omitting the lowest priority PSI report element from the remaining PSI report elements until the remaining PSI report elements fit within the lower layer channel container.

12. The method of any of clauses 1-11, wherein compressing the one or more of the PSI report elements comprises compressing all of the PSI report elements.

13. The method of any of clauses 1-12, wherein a level of compression for the information related to each type of positioning measurement is based on a positioning method performed by the UE.

14. The method of any of clauses 1-13, wherein at least one PSI report element comprises a position fix for the UE and is compressed, wherein the position fix is reported relative to a reference transmission reception point (TRP) or a serving TRP.

15. The method of clause 14, wherein the position fix is in polar coordinates including a distance with one of angles or cosine or sine functions of the angles with respect to the reference TRP or the serving TRP.

16. The method of clause 14, wherein the position fix is in cartesian coordinates and includes a difference of each coordinate with respect to a corresponding coordinate of the reference TRP or the serving TRP.

17. The method of clause 14, wherein the position fix relative to the reference TRP or the serving TRP is compressed by reducing a number of bits used for distance values greater than a maximum value.

18. The method of any of clauses 1-17, wherein the lower layer channel container comprises either a physical layer channel container or a Medium Access Control - Control Element (MAC-CE) block.

19. The method of clause 18, wherein the physical layer channel comprises a physical uplink shared channel (PUSCH), a physical uplink control channel (PUCCH), or a physical sidelink shared channel (PSSCH).

20. The method of any of clauses 1-19, further comprising configuring a level of compression for the one or more of the PSI report element based on a type of physical layer channel.

21. The method of clause 20, wherein a first level of compression is used for the one or more of the PSI report element when the physical layer channel is a physical uplink control channel (PUCCH) and a second level of compression of the one or more of the PSI report element is used when the physical layer channel comprises a physical uplink shared channel (PUSCH), wherein the first level of compression is higher than the second level of compression.

22. The method of any of clauses 1-21, further comprising configuring a level of compression for the one or more of the PSI report element based on a format of the physical layer channel.

23. The method of any of clauses 1-22, wherein the information related to positioning measurements performed by the UE in the PSI report elements comprise one or more of: at least one Reference Signal Time Difference (RSTD) vector; at least one UE receive-transmit time difference (Rx-Tx) vector; at least one reference signal receive power (RSRP) vector; at least one quality metric vector; at least one velocity or trajectory vector; a reference Transmission Reception Point (TRP); at least one Time of Arrival (TOA) vector; at least one multipath vector; at least one Line of Sight (LOS) / Non-Line of Sight (NLOS) factor; at least one Signal to Interference Noise Ratio (SINR) vector; at least one time-stamp, wherein a vector is a set of one or more measurements associated with at least one of a same time, a same TRP, same beam, same frequency band, same antenna, or a combination thereof.

24. A user equipment (LTE) configured for wireless communications, comprising:

a wireless transceiver configured to wirelessly communicate with a network entity in a wireless communication system;

at least one memory;

at least one processor coupled to the wireless transceiver and the at least one memory, wherein the at least one processor is configured to:

determine a plurality of positioning state information (PSI) report elements, wherein each PSI report element comprises information related to positioning measurements performed by the UE;

compress one or more of the PSI report elements;

generate a PSI report with the plurality of PSI report elements wherein one or more of the PSI report elements are compressed; and

transmit, via the wireless transceiver, the PSI report to the network entity in a lower layer channel container.

25. The UE of clause 24, wherein the at least one processor is configured to compress the one or more of the PSI report elements by being configured to use one or more compression configurations to compress the one or more PSI report elements.

26. The UE of clause 25, wherein the one or more compression configurations comprises increasing granularity of the information, increasing a minimum value of the information, decreasing a maximum value of the information, applying linear scaling, logarithmic scaling, or a combination thereof.

27. The UE of any of clauses 25-26, the at least one processor is further configured to:
receive, via the wireless transceiver, the one or more compression configurations to compress the one or more PSI report elements from the network entity.

28. The UE of any of clauses 25-27, wherein the PSI report is divided into a plurality of parts, with at least one part having a constant size and remaining parts having a variable size, and wherein the one or more compression configurations to compress the one or more PSI report elements is reported to the network entity in the at least one part having the constant size.

29. The UE of any of clauses 25-28, wherein the at least one processor is further configured to separately select a compression configuration for the information related to each type of positioning measurement.

30. The UE of any of clauses 25-29, wherein the at least one processor is further configured to select a first compression configuration for the information related to all timing based positioning measurements, a second compression configuration for the information related to all angle based positioning measurements, and a third compression configuration for the information related to all power based positioning measurements.

31. The UE of any of clauses 25-26 and clauses 28-30, wherein the at least one processor is further configured to separately select a compression configuration from preconfigured sets of compression configurations having different levels of compression.

32. The UE of any of clauses 24-31, wherein the at least one processor is further configured to:

determine that a size of the plurality of PSI report elements with one or more of the PSI report elements compressed is larger than the lower layer channel container; and

omit at least one PSI report element from the PSI report so that remaining PSI report elements fit within the lower layer channel container.

33. The UE of any of clauses 24-32, wherein the at least one processor is further configured to:

order the PSI report elements according to one or more priority rules;

wherein the at least one processor is configured to compress the one or more of the PSI report elements by being configured to compress a lowest priority PSI report element;

determine that a size of the plurality of PSI report elements with the lowest priority PSI report element compressed is larger than the lower layer channel container; and

omit the lowest priority PSI report element from the PSI report so that remaining PSI report elements fit within the lower layer channel container.

34. The UE of clause 33, wherein the at least one processor is further configured to: iteratively repeat compressing the lowest priority PSI report element of the remaining PSI report elements and omitting the lowest priority PSI report element from the remaining PSI report elements until the remaining PSI report elements fit within the lower layer channel container.

35. The UE of any of clauses 24-34, wherein the at least one processor is configured to compress the one or more of the PSI report elements by being configured to compress all of the PSI report elements.

36. The UE of any of clauses 24-35, wherein a level of compression for the information related to each type of positioning measurement is based on a positioning method performed by the UE.

37. The UE of any of clauses 24-36, wherein at least one PSI report element comprises a position fix for the UE and is compressed, wherein the position fix is reported relative to a reference transmission reception point (TRP) or a serving TRP.

38. The UE of clause 37, wherein the position fix is in polar coordinates including a distance with one of angles or cosine or sine functions of the angles with respect to the reference TRP or the serving TRP.

39. The UE of clause 37, wherein the position fix is in cartesian coordinates and includes a difference of each coordinate with respect to a corresponding coordinate of the reference TRP or the serving TRP.

40. The UE of clause 37, wherein the position fix relative to the reference TRP or the serving TRP is compressed by reducing a number of bits used for distance values greater than a maximum value.

41. The UE of any of clauses 24-40, wherein the lower layer channel container comprises either a physical layer channel container or a Medium Access Control - Control Element (MAC-CE) block.

42. The UE of clause 41, wherein the physical layer channel comprises a physical uplink shared channel (PUSCH), a physical uplink control channel (PUCCH), or a physical sidelink shared channel (PSSCH).

43. The UE of any of clauses 24-42, wherein the at least one processor is further configured to configure a level of compression for the one or more of the PSI report element based on a type of physical layer channel.

44. The UE of clause 43, wherein a first level of compression is used for the one or more of the PSI report element when the physical layer channel is a physical uplink control channel (PUCCH) and a second level of compression of the one or more of the PSI report element is used when the physical layer channel comprises a physical uplink shared channel (PUSCH), wherein the first level of compression is higher than the second level of compression.

45. The UE of any of clauses 24-44, wherein the at least one processor is further configured to configure a level of compression for the one or more of the PSI report element based on a format of the physical layer channel.

46. The UE of any of clauses 24-45, wherein the information related to positioning measurements performed by the UE in the PSI report elements comprise one or more of: at least one Reference Signal Time Difference (RSTD) vector; at least one UE receive-transmit time difference (Rx-Tx) vector; at least one reference signal receive power (RSRP) vector; at least one quality metric vector; at least one velocity or trajectory vector; a reference Transmission Reception Point (TRP); at least one Time of Arrival (TOA) vector; at least one multipath vector; at least one Line of Sight (LOS) / Non-Line of Sight (NLOS) factor; at least one Signal to Interference Noise Ratio (SINR) vector; at least one time-stamp, wherein a vector is a set of one or more measurements associated with at least one of a same time, a same TRP, same beam, same frequency band, same antenna, or a combination thereof.

47. A user equipment (LTE) configured for wireless communications, comprising:

means for determining a plurality of positioning state information (PSI) report elements, wherein each PSI report element comprises information related to positioning measurements performed by the UE;

means for compressing one or more of the PSI report elements;

means for generating a PSI report with the plurality of PSI report elements wherein one or more of the PSI report elements are compressed; and

means for transmitting the PSI report to a network entity in a lower layer channel container.

48. A non-transitory storage medium including program code stored thereon, the program code is operable to configure at least one processor in a user equipment (LTE) for wireless communications, comprising:

program code to determine a plurality of positioning state information (PSI) report elements, wherein each PSI report element comprises information related to positioning measurements performed by the UE;

program code to compress one or more of the PSI report elements;

program code to generate a PSI report with the plurality of PSI report elements wherein one or more of the PSI report elements are compressed; and

program code to transmit the PSI report to a network entity in a lower layer channel container.

49. A method for a user equipment (LTE) wireless communications performed by a network entity in a wireless network, comprising:

receiving from the UE a positioning state information (PSI) report in a lower layer channel container, the PSI report containing PSI report elements, wherein each PSI report element comprises information related to positioning measurements performed by the UE, wherein one or more of the PSI report elements in the PSI report are compressed; and

processing the PSI report to obtain the information related to positioning measurements.

50. The method of clause 49, wherein the one or more of the PSI report elements is compressed using one or more compression configurations.

51. The method of clause 50, wherein the one or more compression configurations comprises increasing granularity of the information, increasing a minimum value of the information, decreasing a maximum value of the information, applying linear scaling, logarithmic scaling, or a combination thereof.

52. The method of any of clauses 50-51, further comprising:
transmitting the one or more compression configurations to compress the one or more PSI report elements to the UE.

53. The method of any of clauses 50-52, wherein the PSI report is divided into a plurality of parts, with at least one part having a constant size and remaining parts having a variable size, and wherein the one or more compression configurations to compress the one or more PSI report elements is received from the UE in the at least one part having the constant size.

54. The method of any of clauses 50-53, wherein a compression configuration is separately selected for the information related to each type of positioning measurement.

55. The method of any of clauses 50-54, wherein a first compression configuration is selected for the information related to all timing based positioning measurements, a second compression configuration is selected for the information related to all angle based positioning measurements, and a third compression configuration is selected for the information related to all power based positioning measurements.

56. The method of any of clauses 50-51 and clauses 53-55, wherein a compression configuration is selected from preconfigured sets of compression configurations having different levels of compression.

57. The method of any of clauses 49-56, wherein at least one PSI report element is omitted from the PSI report so that remaining PSI report elements fit within the lower layer channel container.

58. The method of any of clauses 49-57, wherein the plurality of PSI report elements is ordered according to one or more priority rules and at least one low priority PSI report elements is omitted from the PSI report.

59. The method of clause 58, wherein a lowest priority PSI report element in the PSI report is compressed and remaining PSI report elements are not compressed.

60. The method of any of clauses 49-59, wherein all of the PSI report elements are compressed.

61. The method of any of clauses 49-60, wherein a level of compression for the information related to each type of positioning measurement is based on a positioning method performed by the UE.

62. The method of any of clauses 49-61, wherein at least one PSI report element comprises a position fix for the UE and is compressed, wherein the position fix is reported relative to a reference transmission reception point (TRP) or a serving TRP.

63. The method of clause 62, wherein the position fix is in polar coordinates including a distance with one of angles or cosine or sine functions of the angles with respect to the reference TRP or the serving TRP.

64. The method of clause 62, wherein the position fix is in cartesian coordinates and includes a difference of each coordinate with respect to a corresponding coordinate of the reference TRP or the serving TRP.

65. The method of clause 62, wherein the position fix relative to the reference TRP or the serving TRP is compressed by reducing a number of bits for distance values greater than a maximum value.

66. The method of any of clauses 49-65, wherein the lower layer channel container comprises either a physical layer channel container or a Medium Access Control - Control Element (MAC-CE) block.

67. The method of clause 66, wherein the physical layer channel comprises a physical uplink shared channel (PUSCH), a physical uplink control channel (PUCCH), or a physical sidelink shared channel (PSSCH).

68. The method of any of clauses 49-67, further comprising configuring a level of compression for the one or more of the PSI report element based on a type of physical layer channel.

69. The method of clause 68, wherein a first level of compression is used for the one or more of the PSI report element when the physical layer channel is a physical uplink control channel (PUCCH) and a second level of compression of the one or more of the PSI report element is used when the physical layer channel comprises a physical uplink shared channel (PUSCH), wherein the first level of compression is higher than the second level of compression.

70. The method of any of clauses 49-69, further comprising configuring a level of compression for the one or more of the PSI report element based on a format of the physical layer channel.

71. The method of any of clauses 49-70, wherein the information related to positioning measurements performed by the UE in the PSI report elements comprise one or more of: at least one Reference Signal Time Difference (RSTD) vector; at least one UE receive-transmit time difference (Rx-Tx) vector; at least one reference signal receive power (RSRP) vector; at least one quality metric vector; at least one velocity or trajectory vector; a reference Transmission Reception Point (TRP); at least one Time of Arrival (TOA) vector; at least one multipath vector; at least one Line of Sight (LOS) / Non-Line of Sight (NLOS) factor; at least one Signal to Interference Noise Ratio (SINR) vector; at least one time-stamp, wherein a vector is a set of one or more measurements associated with at least one of a same time, a same TRP, same beam, same frequency band, same antenna, or a combination thereof.

72. A network entity in a wireless network configured to support wireless communications from a user equipment (UE), comprising:

an external interface configured to wirelessly communicate with the UE;

at least one memory;

at least one processor coupled to the external interface and the at least one memory, wherein the at least one processor is configured to:

receive from the UE, via the external interface, a positioning state information (PSI) report in a lower layer channel container, the PSI report containing PSI report elements, wherein each PSI report element comprises information related to positioning measurements performed by the UE, wherein one or more of the PSI report elements in the PSI report are compressed; and

process the PSI report to obtain the information related to positioning measurements.

73. The network entity of clause 72, wherein the one or more of the PSI report elements is compressed using one or more compression configurations.

74. The network entity of clause 73, wherein the one or more compression configurations comprises increasing granularity of the information, increasing a minimum value of the information, decreasing a maximum value of the information, applying linear scaling, logarithmic scaling, or a combination thereof.

75. The network entity of any of clauses 73-74, wherein the at least one processor is further configured to:
transmit, via the external interface, the one or more compression configurations to compress the one or more PSI report elements to the UE.

76. The network entity of any of clauses 73-75, wherein the PSI report is divided into a plurality of parts, with at least one part having a constant size and remaining parts having a variable size, and wherein the one or more compression configurations to compress the one or more PSI report elements is received from the UE in the at least one part having the constant size.

77. The network entity of any of clauses 73-76, wherein a compression configuration is separately selected for the information related to each type of positioning measurement.

78. The network entity of any of clauses 73-77, wherein a first compression configuration is selected for the information related to all timing based positioning measurements, a second compression configuration is selected for the information related to all angle based positioning measurements, and a third compression configuration is selected for the information related to all power based positioning measurements.

79. The network entity any of clauses 73-74 and clauses 76-78, wherein a compression configuration is selected from preconfigured sets of compression configurations having different levels of compression.

80. The network entity of any of clauses 72-79, wherein at least one PSI report element is omitted from the PSI report so that remaining PSI report elements fit within the lower layer channel container.

81. The network entity of any of clauses 72-80, wherein the plurality of PSI report elements is ordered according to one or more priority rules and at least one low priority PSI report elements is omitted from the PSI report.

82. The network entity of clause 81, wherein a lowest priority PSI report element in the PSI report is compressed and remaining PSI report elements are not compressed.

83. The network entity of any of clauses 72-82, wherein all of the PSI report elements are compressed.

84. The network entity of any of clauses 72-83, wherein a level of compression for the information related to each type of positioning measurement is based on a positioning method performed by the UE.

85. The network entity of any of clauses 72-84, wherein at least one PSI report element comprises a position fix for the UE and is compressed, wherein the position fix is reported relative to a reference transmission reception point (TRP) or a serving TRP.

86. The network entity of clause 85, wherein the position fix is in polar coordinates including a distance with one of angles or cosine or sine functions of the angles with respect to the reference TRP or the serving TRP.

87. The network entity of clause 85, wherein the position fix is in cartesian coordinates and includes a difference of each coordinate with respect to a corresponding coordinate of the reference TRP or the serving TRP.

88. The network entity of clause 85, wherein the position fix relative to the reference TRP or the serving TRP is compressed by reducing a number of bits for distance values greater than a maximum value.

89. The network entity of any of clauses 72-88, wherein the lower layer channel container comprises either a physical layer channel container or a Medium Access Control - Control Element (MAC-CE) block.

90. The network entity of clause 89, wherein the physical layer channel comprises a physical uplink shared channel (PUSCH), a physical uplink control channel (PUCCH), or a physical sidelink shared channel (PSSCH).

91. The network entity of any of clauses 72-90, wherein the at least one processor is further configured to configure a level of compression for the one or more of the PSI report element based on a type of physical layer channel.

92. The network entity of clause 91, wherein a first level of compression is used for the one or more of the PSI report element when the physical layer channel is a physical uplink control channel (PUCCH) and a second level of compression of the one or more of the PSI report element is used when the physical layer channel comprises a physical uplink shared channel (PUSCH), wherein the first level of compression is higher than the second level of compression.

93. The network entity of any of clauses 72-92, wherein the at least one processor is further configured to configure a level of compression for the one or more of the PSI report element based on a format of the physical layer channel.

94. The network entity of any of clauses 72-93, wherein the information related to positioning measurements performed by the UE in the PSI report elements comprise one or more of: at least one Reference Signal Time Difference (RSTD) vector; at least one UE receive-transmit time difference (Rx-Tx) vector; at least one reference signal receive power (RSRP) vector; at least one quality metric vector; at least one velocity or trajectory vector; a reference Transmission Reception Point (TRP); at least one Time of Arrival (TOA) vector; at least one multipath vector; at least one Line of Sight (LOS) / Non-Line of Sight (NLOS) factor; at least one Signal to Interference Noise Ratio (SINR) vector; at least one time-stamp, wherein a vector is a set of one or more measurements associated with at least one of a same time, a same TRP, same beam, same frequency band, same antenna, or a combination thereof.

95. A network entity in a wireless network configured to support wireless communications from a user equipment (UE), comprising:

means for receiving from the UE a positioning state information (PSI) report in a lower layer channel container, the PSI report containing PSI report elements, wherein each PSI report element comprises information related to positioning measurements performed by the UE, wherein one or more of the PSI report elements in the PSI report are compressed; and

means for processing the PSI report to obtain the information related to positioning measurements.

96. A non-transitory storage medium including program code stored thereon, the program code is operable to configure at least one processor in a network entity in a wireless network to support wireless communications from a user equipment (UE), comprising:

program code to receive from the UE a positioning state information (PSI) report in a lower layer channel container, the PSI report containing PSI report elements, wherein each PSI report element comprises information related to positioning measurements performed by the UE, wherein one or more of the PSI report elements in the PSI report are compressed; and

program code to process the PSI report to obtain the information related to positioning measurements.

Therefore, it is intended that claimed subject matter not be limited to the particular examples disclosed, but that such claimed subject matter may also include all aspects falling within the scope of appended claims, and equivalents thereof.

## Claims

1. A method for a user equipment, UE, wireless communications performed by the UE, comprising:

determining a plurality of positioning state information, PSI, report elements, wherein each PSI report element comprises information related to positioning measurements performed by the UE;
compressing one or more of the PSI report elements;
generating a PSI report with the plurality of PSI report elements wherein one or more of the PSI report elements are compressed; and
transmitting the PSI report to a network entity in a lower layer channel container,
the method further comprising configuring a level of compression for the one or more of the PSI report element based on a type or a format of the physical layer channel.

2. The method of claim 1, wherein a first level of compression is used for the one or more of the PSI report element when the physical layer channel is a physical uplink control channel, PUCCH, and a second level of compression of the one or more of the PSI report element is used when the physical layer channel comprises a physical uplink shared channel, PUSCH, wherein the first level of compression is higher than the second level of compression.

3. The method of claim 0, wherein compressing the one or more of the PSI report elements comprises using one or more compression configurations to compress the one or more PSI report elements.

**4.** The method of claim 0, further comprising:

    determining that a size of the plurality of PSI report elements with one or more of the PSI report elements compressed is larger than the lower layer channel container; and
    omitting at least one PSI report element from the PSI report so that remaining PSI report elements fit within the lower layer channel container.

**5.** The method of claim 0, further comprising:

    ordering the PSI report elements according to one or more priority rules;
    wherein compressing the one or more of the PSI report elements comprises compressing a lowest priority PSI report element;
    determining that a size of the plurality of PSI report elements with the lowest priority PSI report element compressed is larger than the lower layer channel container; and
    omitting the lowest priority PSI report element from the PSI report so that remaining PSI report elements fit within the lower layer channel container.

**6.** The method of claim 0, wherein compressing the one or more of the PSI report elements comprises compressing all of the PSI report elements.

**7.** The method of claim 0, wherein a level of compression for the information related to each type of positioning measurement is based on a positioning method performed by the UE.

**8.** The method of claim 0, wherein at least one PSI report element comprises a position fix for the UE and is compressed, wherein the position fix is reported relative to a reference transmission reception point, TRP, or a serving TRP.

**9.** The method of claim 0, wherein the lower layer channel container comprises either a physical layer channel container or a Medium Access Control - Control Element, MAC-CE, block.

**10.** A user equipment, UE, configured for wireless communications, comprising:

    a wireless transceiver configured to wirelessly communicate with a network entity in a wireless communication system;
    at least one memory;
    at least one processor coupled to the wireless transceiver and the at least one memory, wherein the at least one processor is configured to:

        determine a plurality of positioning state information, PSI) report elements, wherein each PSI report element comprises information related to positioning measurements performed by the UE;
        compress one or more of the PSI report elements;
        generate a PSI report with the plurality of PSI report elements wherein one or more of the PSI report elements are compressed; and
        transmit, via the wireless transceiver, the PSI report to the network entity in a lower layer channel container,
        wherein the at least one processor is further configured to configure a level of compression for the one or more of the PSI report element based on a type or format of the physical layer channel.

**11.** The UE of claim 10, wherein a first level of compression is used for the one or more of the PSI report element when the physical layer channel is a physical uplink control channel, PUCCH, and a second level of compression of the one or more of the PSI report element is used when the physical layer channel comprises a physical uplink shared channel, PUSCH, wherein the first level of compression is higher than the second level of compression.

**12.** A method for a user equipment, UE, wireless communications performed by a network entity in a wireless network, comprising:

    receiving from the UE a positioning state information, PSI, report in a lower layer channel container, the PSI report containing PSI report elements, wherein each PSI report element comprises information related to positioning measurements performed by the UE, wherein one or more of the PSI report elements in the PSI report are compressed; and
    processing the PSI report to obtain the information related to positioning measurements,
    further comprising configuring a level of compression for the one or more of the PSI report element based on a type or format of the physical layer channel.

**13.** The method of claim 12, wherein a first level of compression is used for the one or more of the PSI report element when the physical layer channel is a physical uplink control channel, PUCCH, and a second level of compression of the one or more of the PSI report element is used when the physical layer channel comprises a physical uplink shared channel, PUSCH, wherein the first level of compression is higher than the second level of compression.

14. A network entity in a wireless network configured to support wireless communications from a user equipment, UE, comprising:

an external interface configured to wirelessly communicate with the UE;
at least one memory;
at least one processor coupled to the external interface and the at least one memory, wherein the at least one processor is configured to:

receive from the UE, via the external interface, a positioning state information, PSI, report in a lower layer channel container, the PSI report containing PSI report elements, wherein each PSI report element comprises information related to positioning measurements performed by the UE, wherein one or more of the PSI report elements in the PSI report are compressed; and
process the PSI report to obtain the information related to positioning measurements,
wherein the at least one processor is further configured to configure a level of compression for the one or more of the PSI report element based on a type or format of the physical layer channel.

15. The network entity of claim 14, wherein a first level of compression is used for the one or more of the PSI report element when the physical layer channel is a physical uplink control channel, PUCCH, and a second level of compression of the one or more of the PSI report element is used when the physical layer channel comprises a physical uplink shared channel, PUSCH, wherein the first level of compression is higher than the second level of compression.

**FIG. 1**

*FIG. 2A*

**FIG. 2B**

FIG. 3

FIG. 4

500

502

104

PSI Report

Network
Entity

510

504          506

| Fixed | Variable |

**FIG. 5**

602

602'

606

Min

Max

604

**FIG. 6**

FIG. 7

FIG. 8

900

START

910
Generate PSI report with plurality of PSI report elements

920
Does PSI report fit in container?

Y

N

930
Compress one or more PSI report element(s)

940
Does PSI report fit in container?

Y

N

950
Omit PSI report element

960
Transmit PSI report in container

**FIG. 9**

1000

START

↓

1010
Generate PSI report with plurality of PSI report elements

↓

1020
Does PSI report fit in container?

Y →

N ↓

1030
Compress lowest priority PSI report element(s)

↓

1040
Does PSI report fit in container?

Y →

N ↓

1050
Omit lowest priority PSI report element(s)

↓

Y

1055
Does PSI report fit in container?

N →

←

1060
Transmit PSI report in container

*FIG. 10*

**FIG. 11A**

**FIG. 11B**

FIG. 12

**1300**

```
                                                                1302
┌──────────────────────────────────────────────────────────┐
│   Determine a plurality of positioning state information (PSI) report │
│   elements, wherein each PSI report element comprises information │
│     related to positioning measurements performed by the UE │
└──────────────────────────────────────────────────────────┘
                              │
                              ▼
                                                                1304
┌──────────────────────────────────────────────────────────┐
│                                                            │
│            Compress one or more of the PSI report elements │
│                                                            │
└──────────────────────────────────────────────────────────┘
                              │
                              ▼
                                                                1306
┌──────────────────────────────────────────────────────────┐
│   Generate a PSI report with the plurality of PSI report elements wherein │
│        one or more of the PSI report elements are compressed │
└──────────────────────────────────────────────────────────┘
                              │
                              ▼
                                                                1308
┌──────────────────────────────────────────────────────────┐
│   Transmit the PSI report to a network entity in a lower layer channel │
│                          container │
└──────────────────────────────────────────────────────────┘
```

*FIG. 13*

1400

1402

Receive from the UE a positioning state information (PSI) report in a lower layer channel container, the PSI report containing PSI report elements, wherein each PSI report element comprises information related to positioning measurements performed by the UE, wherein one or more of the PSI report elements in the PSI report are compressed

1404

Process the PSI report to the information related to positioning measurements

*FIG. 14*

1511

WWAN Transceiver 1510

| 1512 | 1514 |

1500

Connections(s) 1506

Medium
1520

1508

UL PRS
1522

DL PRS
1524

Position Measurement
1526

PSI Report Element
1528

Compression Config
1530

Scheduling
1532

Ordering
1534

Compression
1536

Omitting
1538

PSI Report
1540

Transmit PSI Report
1542

Processing
Unit(s)
1502

Memory
1504

*FIG. 15*

1611

1600

Transceiver 1610

1612

1614

Connections(s) 1606

Communications
Interface
1616

Medium
1620

1608

UL PRS
1622

DL PRS
1624

Scheduling
1626

Receive PSI Report
1628

Compression Config
1630

Process PSI Report
1632

Processing
Unit(s)
1602

Memory
1604

*FIG. 16*